(19) Europäisches Patentamt
European Patent Office
Office européen des brevets

(11) **EP 4 498 679 A1**

(12) **EUROPEAN PATENT APPLICATION**
published in accordance with Art. 153(4) EPC

(43) Date of publication:
29.01.2025 Bulletin 2025/05

(21) Application number: 23775258.9

(22) Date of filing: 21.03.2023

(51) International Patent Classification (IPC):
*H04N 19/597* (2014.01)     *H04N 19/70* (2014.01)
*H04N 19/119* (2014.01)     *H04N 19/105* (2014.01)
*G01S 17/894* (2020.01)     *G01S 17/931* (2020.01)

(52) Cooperative Patent Classification (CPC):
G01S 17/894; G01S 17/931; H04N 19/105;
H04N 19/119; H04N 19/597; H04N 19/70

(86) International application number:
PCT/KR2023/003708

(87) International publication number:
WO 2023/182762 (28.09.2023 Gazette 2023/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.03.2022 KR 20220034808

(71) Applicant: LG Electronics Inc.
Yeongdeungpo-gu
Seoul 07336 (KR)

(72) Inventor: HUR, Hyejung
Seoul 06772 (KR)

(74) Representative: Frenkel, Matthias Alexander
Wuesthoff & Wuesthoff
Patentanwälte und Rechtsanwalt PartG mbB
Schweigerstraße 2
81541 München (DE)

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(57)     A point cloud data transmission method according to embodiments may comprise the steps of: encoding point cloud data; and transmitting a bitstream including the point cloud data. A point cloud data reception method according to embodiments may comprise the steps of: receiving a bitstream including point cloud data; and decoding the point cloud data.

FIG. 1

**Description**

[Technical Field]

Embodiments relate to a method and device for processing point cloud content.

[Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

[Disclosure]

[Technical Problem]

Embodiments provide a device and method for efficiently processing point cloud data. Embodiments provide a point cloud data processing method and device for addressing latency and encoding/decoding complexity.
The technical scope of the embodiments is not limited to the aforementioned technical objects, and may be extended to other technical objects that may be inferred by those skilled in the art based on the entire contents disclosed herein.

[Technical Solution]

In one aspect of the present disclosure, a method of transmitting point cloud data may include encoding point cloud data, and transmitting a bitstream containing the point cloud data. In another aspect of the present disclosure, a method of receiving point cloud data may include receiving a bitstream containing point cloud data, and decoding the point cloud data.

[Advantageous Effects]

Devices and methods according to embodiments may process point cloud data with high efficiency.
The devices and methods according to the embodiments may provide a high-quality point cloud service.
The devices and methods according to the embodiments may provide point cloud content for providing general-purpose services such as a VR service and a self-driving service.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts.

FIG. 1 shows an exemplary point cloud content providing system according to embodiments;
FIG. 2 is a block diagram illustrating a point cloud content providing operation according to embodiments;
FIG. 3 illustrates an exemplary point cloud encoder according to embodiments;
FIG. 4 shows an example of an octree and occupancy code according to embodiments;
FIG. 5 illustrates an example of point configuration in each LOD according to embodiments;
FIG. 6 illustrates an example of point configuration in each LOD according to embodiments;
FIG. 7 illustrates a point cloud decoder according to embodiments;
FIG. 8 illustrates a transmission device according to embodiments;
FIG. 9 illustrates a reception device according to embodiments;
FIG. 10 illustrates an exemplary structure operable in connection with point cloud data transmission/reception methods/devices according to embodiments;

FIG. 11 illustrates an example of a road point cloud captured by LiDAR equipment on a moving vehicle according to embodiments;

FIG. 12 illustrates an example of a separated road point cloud according to embodiments;

FIG. 13 illustrates an example of road points captured by LiDAR according to embodiments;

FIG. 14 illustrates an example in which a shape is partially changed when a vehicle equipped with LiDAR equipment according to embodiments that does not move, but objects around the vehicle move;

FIG. 15 illustrates an example of a point cloud acquired when a vehicle provided with LiDAR equipment according to embodiments turns right;

FIG. 16 illustrates an example of a point cloud captured by LiDAR equipment according to embodiments;

FIG. 17 illustrates an example of road points being changed by a moving object according to embodiments;

FIG. 18 illustrates an example of road points being changed when there is only translation motion according to embodiments;

FIG. 19 illustrates an example of road points being changed when there are translation motion and rotation motion according to embodiments;

FIG. 20 illustrates a point cloud data transmission device according to embodiments;

FIG. 21 illustrates a point cloud data receiving device according to embodiments;

FIG. 22 illustrates a bitstream containing point cloud data and parameters according to embodiments;

FIG. 23 illustrates a sequence parameter set (SPS) according to embodiments;

FIG. 24 illustrates a geometry parameter set (GPS) according to embodiments;

FIG. 25 illustrates a syntax of a tile parameter set (TPS) according to embodiments;

FIG. 26 illustrates a syntax of a geometry slice header (geometry data header) according to embodiments;

FIG. 27 shows a syntax of a geometry PU header according to embodiments;

FIG. 28 illustrates a point cloud data transmission method according to embodiments; and

FIG. 29 illustrates a point cloud data reception method according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

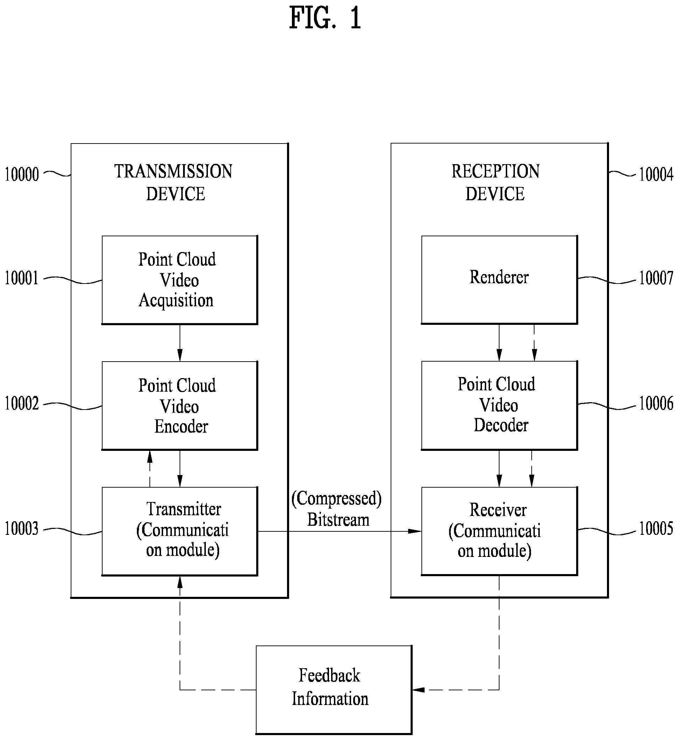

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

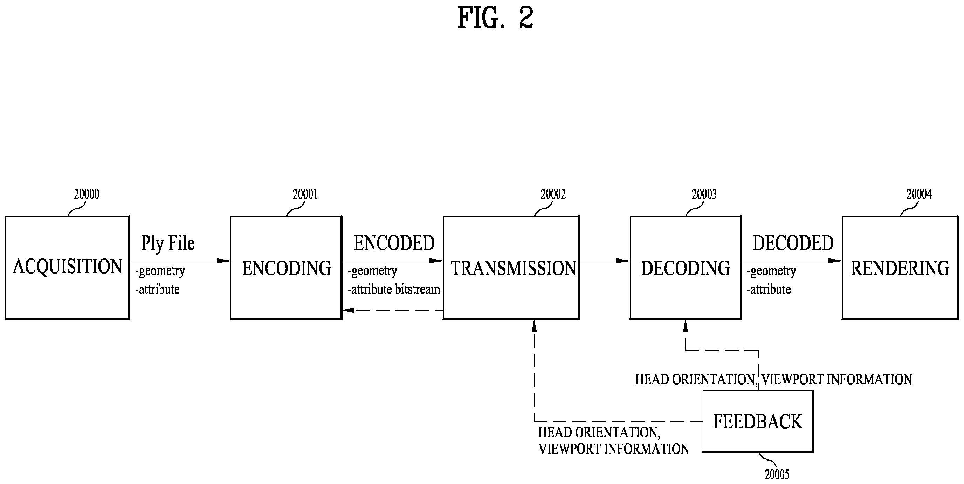

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquirer 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus a detailed description thereof is omitted.

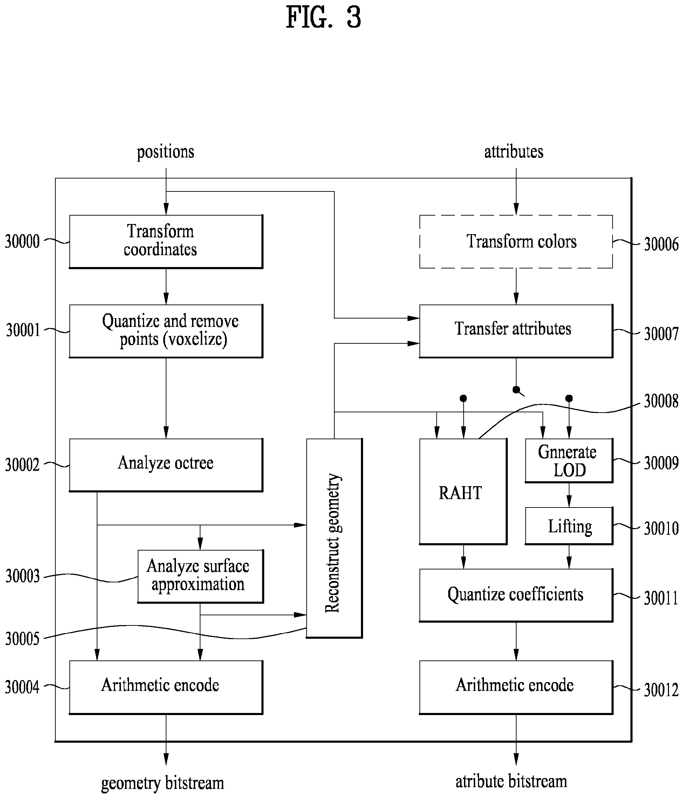

FIG. 3 illustrates an exemplary point cloud encoder according to embodiments.

FIG. 3 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 30000, a quantizer (Quantize and remove points (voxelize)) 30001, an octree analyzer (Analyze octree) 30002, and a surface approximation analyzer (Analyze surface approximation) 30003, an arithmetic encoder (Arithmetic encode) 30004, a geometry reconstructor (Reconstruct geometry) 30005, a color transformer (Transform colors) 30006, an attribute transformer (Transform attributes) 30007, a RAHT transformer (RAHT) 30008, an LOD generator (Generate LOD) 30009, a lifting transformer (Lifting) 30010, a coefficient quantizer (Quantize coefficients) 30011, and/or an arithmetic encoder (Arithmetic encode) 30012.

The coordinate transformer 30000, the quantizer 30001, the octree analyzer 30002, the surface approximation analyzer 30003, the arithmetic encoder 30004, and the geometry reconstructor 30005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 30000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 30001 according to the embodiments quantizes the geometry. For example, the quantizer 30001 may quantize the points based on a minimum position value of all points (e.g., a minimum value on each of the X, Y, and Z axes). The quantizer 30001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 30001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 30001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 30002 according to the embodiments performs octree geometry coding (or octree coding) to present voxels in an octree structure. The octree structure represents points matched with voxels, based on the octal tree structure.

The surface approximation analyzer 30003 according to the embodiments may analyze and approximate the octree. The octree analysis and approximation according to the embodiments is a process of analyzing a region containing a plurality of points to efficiently provide octree and voxelization.

The arithmetic encoder 30004 according to the embodiments performs entropy encoding on the octree and/or the approximated octree. For example, the encoding scheme includes arithmetic encoding. As a result of the encoding, a geometry bitstream is generated.

The color transformer 30006, the attribute transformer 30007, the RAHT transformer 30008, the LOD generator 30009, the lifting transformer 30010, the coefficient quantizer 30011, and/or the arithmetic encoder 30012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 30006 according to the embodiments performs color transform coding of transforming color values (or textures) included in the attributes. For example, the color transformer 30006 may transform the format of color information (for example, from RGB to YCbCr). The operation of the color transformer 30006 according to embodiments may be optionally applied according to the color values included in the attributes.

The geometry reconstructor 30005 according to the embodiments reconstructs (decompresses) the octree and/or the approximated octree. The geometry reconstructor 30005 reconstructs the octree/voxels based on the result of analyzing the distribution of points. The reconstructed octree/voxels may be referred to as reconstructed geometry (restored geometry).

The attribute transformer 30007 according to the embodiments performs attribute transformation to transform the attributes based on the reconstructed geometry and/or the positions on which geometry encoding is not performed. As described above, since the attributes are dependent on the geometry, the attribute transformer 30007 may transform the attributes based on the reconstructed geometry information. For example, based on the position value of a point included in a voxel, the attribute transformer 30007 may transform the attribute of the point at the position. As described above, when the position of the center of a voxel is set based on the positions of one or more points included in the voxel, the attribute transformer 30007 transforms the attributes of the one or more points. When the trisoup geometry encoding is performed, the attribute transformer 30007 may transform the attributes based on the trisoup geometry encoding.

The attribute transformer 30007 may perform the attribute transformation by calculating the average of attributes or attribute values of neighboring points (e.g., color or reflectance of each point) within a specific position/radius from the position (or position value) of the center of each voxel. The attribute transformer 30007 may apply a weight according to the distance from the center to each point in calculating the average. Accordingly, each voxel has a position and a calculated attribute (or attribute value).

The attribute transformer 30007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 30007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 30009.

The RAHT transformer 30008 according to the embodiments performs RAHT coding for predicting attribute information based on the reconstructed geometry information. For example, the RAHT transformer 30008 may predict attribute information of a node at a higher level in the octree based on the attribute information associated with a node at a lower level in the octree.

The LOD generator 30009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 30010 according to the embodiments performs lifting transform coding of transforming the attributes a point cloud based on weights. As described above, lifting transform coding may be optionally applied.

The coefficient quantizer 30011 according to the embodiments quantizes the attribute-coded attributes based on coefficients.

The arithmetic encoder 30012 according to the embodiments encodes the quantized attributes based on arithmetic coding.

Although not shown in the figure, the elements of the point cloud encoder of FIG. 3 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 3 described above. Additionally, the one or more processors may operate or execute a set of software programs and/or instructions for performing the operations and/or functions of the elements of the point cloud encoder of FIG. 3. The one or more memories according to the embodiments may include a high speed random access memory, or include a non-volatile memory (e.g., one or more magnetic disk storage devices, flash memory devices, or other non-volatile solid-state memory devices).

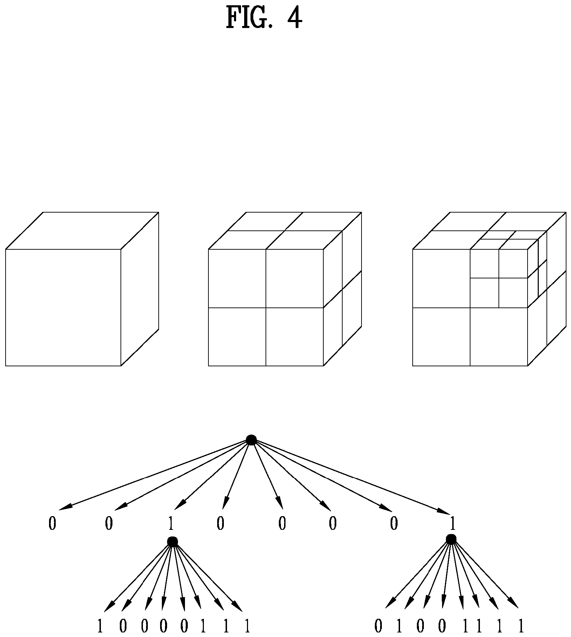

FIG. 4 shows an example of an octree and occupancy code according to embodiments.

As described with reference to FIGS. 1 to 3, the point cloud content providing system (point cloud video encoder 10002) or the point cloud encoder (e.g., the octree analyzer 30002) performs octree geometry coding (or octree coding) based on an octree structure to efficiently manage the region and/or position of the voxel.

The upper part of FIG. 4 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles $(0, 0, 0)$ and $(2^d, 2^d, 2^d)$. Here, 2d may be set to a value constituting the smallest bounding box surrounding all points of the point cloud content (or point cloud video). Here, d denotes the depth of the octree. The value of d is determined in the following equation. In the following equation, $(x^{int}_n, y^{int}_n, z^{int}_n)$ denotes the positions (or position values) of quantized points.

$$d = Ceil(Log2(Max(x\_n^\wedge int, y\_n^\wedge int, z\_n^\wedge in, n=1,...,N)+1))$$

As shown in the middle of the upper part of FIG. 4, the entire 3D space may be divided into eight spaces according to partition. Each divided space is represented by a cube with six faces. As shown in the upper right of FIG. 4, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 4 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 4 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 30004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 30002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 30004) according to the embodiments may perform entropy coding on the positions (or position values) of the points.

The point cloud encoder (e.g., the surface approximation analyzer 30003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta x$, $\Delta y$, $\Delta z$) of the edge, and the vertex position value (relative position value within the edge). When the trisoup geometry encoding is applied, the point cloud encoder according to the embodiments (e.g., the geometry reconstructor 30005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$① \begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix} \quad ② \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix} \quad ③ \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For 'example, when the element x is the minimum, each vertex is projected on the x-axis with respect to the center of the block, and projected on the (y, z) plane. When the values obtained through projection on the (y, z) plane are (ai, bi), the value of θ is estimated through atan2(bi, ai), and the vertices are ordered based on the value of θ. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

Triangles formed from vertices ordered 1,...,n

| n | triangles |
|---|---|
| 3 | (1,2,3) |
| 4 | (1,2,3), (3,4,1) |
| 5 | (1,2,3), (3,4,5), (5,1,3) |
| 6 | (1,2,3), (3,4,5), (5,6,1), (1,3,5) |
| 7 | (1,2,3), (3,4,5), (5,6,7), (7,1,3), (3,5,7) |
| 8 | (1,2,3), (3,4,5), (5,6,7), (7,8,1), (1,3,5), (5,7,1) |
| 9 | (1,2,3), (3,4,5), (5,6,7), (7,8,9), (9,1,3), (3,5,7), (7,9,3) |
| 10 | (1,2,3), (3,4,5), (5,6,7), (7,8,9), (9,10,1), (1,3,5), (5,7,9), (9,1,5) |
| 11 | (1,2,3), (3,4,5), (5,6,7), (7,8,9), (9,10,11), (11,1,3), (3,5,7), (7,9,11), (11,3,7) |
| 12 | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

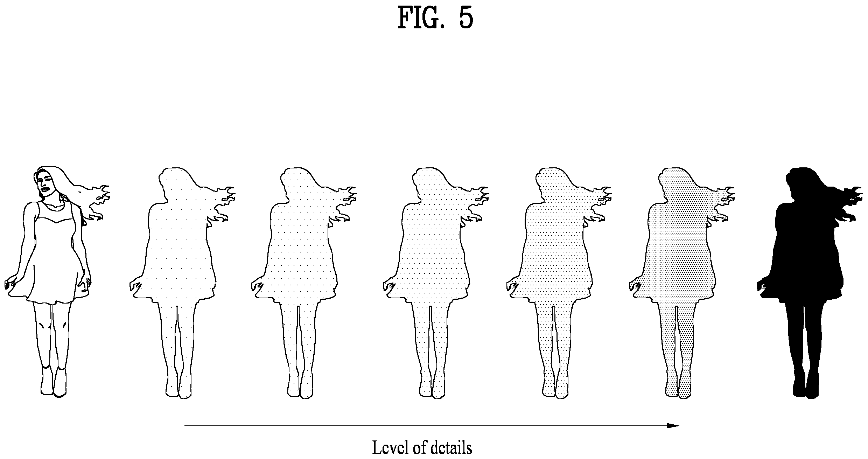

FIG. 5 illustrates an example of point configuration in each LOD according to embodiments.

As described with reference to FIGS. 1 to 4, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 30009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

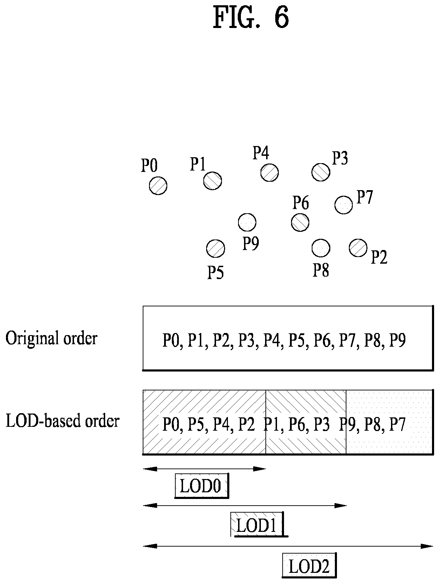

FIG. 6 illustrates an example of point configuration for each LOD according to embodiments.

As described with reference to FIGS. 1 to 5, the point cloud content providing system, or the point cloud encoder (e.g., the point cloud video encoder 10002, the point cloud encoder of FIG. 3, or the LOD generator 30009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 6 shows examples (P0 to P9) of points of the point cloud content distributed in a 3D space. In FIG. 6, the original order represents the order of points P0 to P9 before LOD generation. In FIG. 6, the LOD based order represents the order of points according to the LOD generation. Points are reorganized by LOD. Also, a high LOD contains the points belonging to lower LODs. As shown in FIG. 6, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 3, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 30011) may quantize and inversely quantize the residuals (which may be called residual attributes, residual attribute values, or attribute prediction residuals, attribute residuals) obtained by subtracting a predicted attribute (attribute value) from the attribute (attribute value) of each point. The quantization process is configured as shown in the following table.

TABLE Attribute prediction residuals quantization pseudo code

```
int PCCQuantization(int value, int quantStep) {
if( value >=0) {
return floor(value / quantStep + 1.0 / 3.0);
} else {
return -floor(-value / quantStep + 1.0 / 3.0);
}
}
```

TABLE Attribute prediction residuals inverse quantization pseudo code

```
int PCCInverseQuantization(int value, int quantStep) {
if( quantStep ==0) {
return value;
} else {
return value * quantStep;
}
}
```

When the predictor of each point has neighbor points, the point cloud encoder (e.g., the arithmetic encoder 30012) according to the embodiments may perform entropy coding on the quantized and inversely quantized residual values as described above. When the predictor of each point has no neighbor point, the point cloud encoder according to the embodiments (e.g., the arithmetic encoder 30012) may perform entropy coding on the attributes of the corresponding point without performing the above-described operation.

The point cloud encoder according to the embodiments (e.g., the lifting transformer 30010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 30011) according to the embodiments quantizes the predicted attribute values. In addition, the point cloud encoder (e.g., the arithmetic encoder 30012) performs entropy coding on the quantized attribute values.

The point cloud encoder (for example, the RAHT transformer 30008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l_{x,y,z}}$ denotes the average attribute value of voxels at level 1. $g_{l_{x,y,z}}$ may be calculated based on $g_{l+1_{2x,y,z}}$ and $g_{l+1_{2x+1,y,z}}$ . The weights for $g_{l_{2x,y,z}}$ and $g_{l_{2x+1,y,z}}$ are $w1 = w_{l_{2x,y,z}}$ and $w2 = w_{l\ 2x+1,y,z}$.

$$\begin{bmatrix} g_{l-1\ x,y,z} \\ h_{l-1\ x,y,z} \end{bmatrix} = T_{w1\ w2} \begin{bmatrix} g_{l\ 2x,y,z} \\ g_{l_{2x+1,y,z}} \end{bmatrix}, \quad T_{w1\ w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1_{x,y,z}}$ is a low-pass value and is used in the merging process at the next higher level. $h_{l-1_{x,y,z}}$ denotes high-pass coefficients. The high-pass coefficients at each step are quantized and subjected to entropy coding (e.g., encoding by the arithmetic encoder 300012). The weights are calculated as $w_{l-1_{x,y,z}} = w_{l_{2x,y,z}} + w_{l_{2x+1,y,z}}$. The root node is created through the $g_{1_{0,0,0}}$ and $g_{1_{0,0,1}}$ as follows.

$$\begin{bmatrix} gDC \\ h_{0_{0,0,0}} \end{bmatrix} = T_{w1000\ w1001} \begin{bmatrix} g_{1\ 0,0,0z} \\ g_{1_{0,0,1}} \end{bmatrix}$$

The value of gDC is also quantized and subjected to entropy coding like the high-pass coefficients.

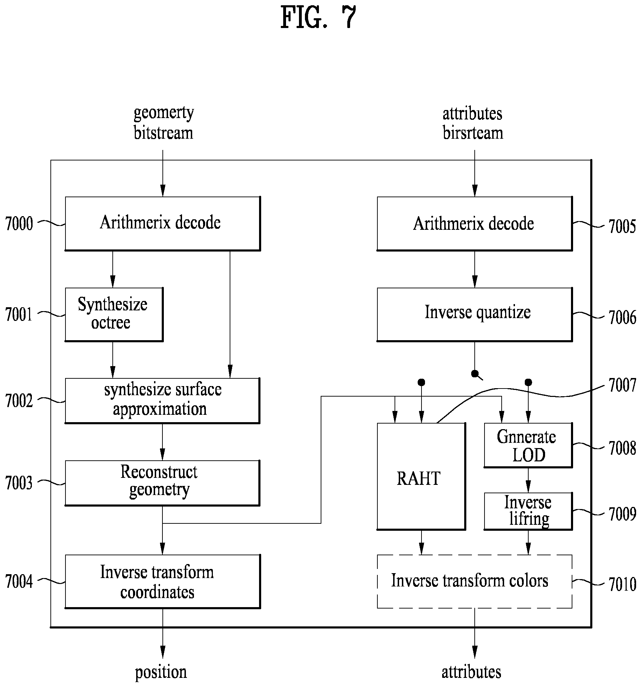

FIG. 7 illustrates a point cloud decoder according to embodiments.

The point cloud decoder illustrated in FIG. 7 is an example of the point cloud decoder and may perform a decoding operation, which is a reverse process to the encoding operation of the point cloud encoder illustrated in FIGS. 1 to 6.

As described with reference to FIGS. 1 and 6, the point cloud decoder may perform geometry decoding and attribute decoding. The geometry decoding is performed before the attribute decoding.

The point cloud decoder according to the embodiments includes an arithmetic decoder (Arithmetic decode) 7000, an octree synthesizer (Synthesize octree) 7001, a surface approximation synthesizer (Synthesize surface approximation) 7002, and a geometry reconstructor (Reconstruct geometry) 7003, a coordinate inverse transformer (Inverse transform coordinates) 7004, an arithmetic decoder (Arithmetic decode) 7005, an inverse quantizer (Inverse quantize) 7006, a RAHT transformer 7007, an LOD generator (Generate LOD) 7008, an inverse lifter (inverse lifting) 7009, and/or a color inverse transformer (Inverse transform colors) 7010.

The arithmetic decoder 7000, the octree synthesizer 7001, the surface approximation synthesizer 7002, and the geometry reconstructor 7003, and the coordinate inverse transformer 7004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 6.

The arithmetic decoder 7000 according to the embodiments decodes the received geometry bitstream based on the arithmetic coding. The operation of the arithmetic decoder 7000 corresponds to the reverse process to the arithmetic encoder 30004.

The octree synthesizer 7001 according to the embodiments may generate an octree by acquiring an occupancy code from the decoded geometry bitstream (or information on the geometry secured as a result of decoding). The occupancy code is configured as described in detail with reference to FIGS. 1 to 6.

When the trisoup geometry encoding is applied, the surface approximation synthesizer 7002 according to the embodiments may synthesize a surface based on the decoded geometry and/or the generated octree.

The geometry reconstructor 7003 according to the embodiments may regenerate geometry based on the surface and/or the decoded geometry. As described with reference to FIGS. 1 to 9, direct coding and trisoup geometry encoding are selectively applied. Accordingly, the geometry reconstructor 7003 directly imports and adds position information about the points to which direct coding is applied. When the trisoup geometry encoding is applied, the geometry reconstructor 7003 may reconstruct the geometry by performing the reconstruction operations of the geometry reconstructor 30005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 7004 according to the embodiments may acquire positions of the points by transforming the coordinates based on the reconstructed geometry.

The arithmetic decoder 7005, the inverse quantizer 7006, the RAHT transformer 7007, the LOD generator 7008, the inverse lifter 7009, and/or the color inverse transformer 7010 may perform the attribute decoding described with reference to FIG. 6. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 7005 according to the embodiments decodes the attribute bitstream by arithmetic coding.

The inverse quantizer 7006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 7007, the LOD generator 7008, and/or the inverse lifter 7009 may process the reconstructed geometry and the inversely quantized attributes. As described above, the RAHT transformer 7007, the LOD generator 7008, and/or the inverse lifter 7009 may selectively perform a decoding operation corresponding to the encoding of the point cloud encoder.

The color inverse transformer 7010 according to the embodiments performs inverse transform coding to inversely transform a color value (or texture) included in the decoded attributes. The operation of the color inverse transformer 7010 may be selectively performed based on the operation of the color transformer 30006 of the point cloud encoder.

Although not shown in the figure, the elements of the point cloud decoder of FIG. 7 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 7 described above. Additionally, the one or more processors may operate or execute a set of software programs and/or instructions for performing the operations and/or functions of the elements of the point cloud decoder of FIG. 7.

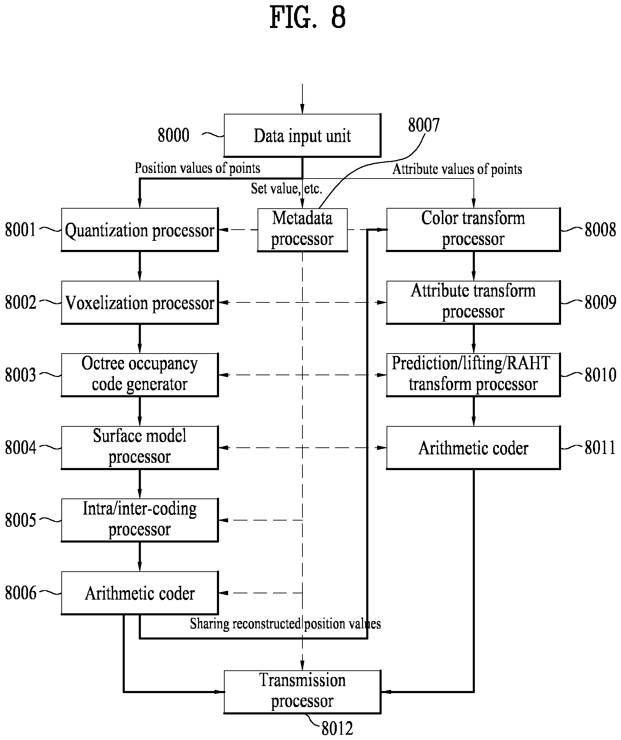

FIG. 8 illustrates a transmission device according to embodiments.

The transmission device shown in FIG. 8 is an example of the transmission device 10000 of FIG. 1 (or the point cloud encoder of FIG. 3). The transmission device illustrated in FIG. 8 may perform one or more of the operations and methods the same as or similar to those of the point cloud encoder described with reference to FIGS. 1 to 6. The transmission device according to the embodiments may include a data input unit 8000, a quantization processor 8001, a voxelization processor 8002, an octree occupancy code generator 8003, a surface model processor 8004, an intra/inter-coding processor 8005, an arithmetic coder 8006, a metadata processor 8007, a color transform processor 8008, an attribute transform processor 8009, a prediction/lifting/RAHT transform processor 8010, an arithmetic coder 8011 and/or a transmission processor 8012.

The data input unit 8000 according to the embodiments receives or acquires point cloud data. The data input unit 8000 may perform an operation and/or acquisition method the same as or similar to the operation and/or acquisition method of the point cloud video acquirer 10001 (or the acquisition process 20000 described with reference to FIG. 2).

The data input unit 8000, the quantization processor 8001, the voxelization processor 8002, the octree occupancy code generator 8003, the surface model processor 8004, the intra/inter-coding processor 8005, and the arithmetic coder 8006 perform geometry encoding. The geometry encoding according to the embodiments is the same as or similar to the geometry encoding described with reference to FIGS. 1 to 9, and thus a detailed description thereof is omitted.

The quantization processor 8001 according to the embodiments quantizes geometry (e.g., position values of points). The operation and/or quantization of the quantization processor 8001 is the same as or similar to the operation and/or quantization of the quantizer 30001 described with reference to FIG. 3. Details are the same as those described with reference to FIGS. 1 to 9.

The voxelization processor 8002 according to the embodiments voxelizes the quantized position values of the points. The voxelization processor 8002 may perform an operation and/or process the same or similar to the operation and/or the voxelization process of the quantizer 30001 described with reference to FIG. 3. Details are the same as those described with reference to FIGS. 1 to 6.

The octree occupancy code generator 8003 according to the embodiments performs octree coding on the voxelized positions of the points based on an octree structure. The octree occupancy code generator 8003 may generate an occupancy code. The octree occupancy code generator 8003 may perform an operation and/or method the same as or similar to the operation and/or method of the point cloud encoder (or the octree analyzer 30002) described with reference to FIGS. 3 and 4. Details are the same as those described with reference to FIGS. 1 to 6.

The surface model processor 8004 according to the embodiments may perform trisoup geometry encoding based on a surface model to reconstruct the positions of points in a specific region (or node) on a voxel basis. The surface model processor 8004 may perform an operation and/or method the same as or similar to the operation and/or method of the point cloud encoder (e.g., the surface approximation analyzer 30003) described with reference to FIG. 3. Details are the same as those described with reference to FIGS. 1 to 6.

The intra/inter-coding processor 8005 according to the embodiments may perform intra/inter-coding on point cloud data. The intra/inter-coding processor 8005 may perform coding the same as or similar to the intra/inter-coding described with reference to FIG. 7. Details are the same as those described with reference to FIG. 7. According to embodiments, the intra/inter-coding processor 8005 may be included in the arithmetic coder 8006.

The arithmetic coder 8006 according to the embodiments performs entropy encoding on an octree of the point cloud data and/or an approximated octree. For example, the encoding scheme includes arithmetic encoding. The arithmetic coder 8006 performs an operation and/or method the same as or similar to the operation and/or method of the arithmetic encoder 30004.

The metadata processor 8007 according to the embodiments processes metadata about the point cloud data, for example, a set value, and provides the same to a necessary processing process such as geometry encoding and/or attribute encoding. Also, the metadata processor 8007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 8008, the attribute transform processor 8009, the prediction/lifting/RAHT transform processor 8010, and the arithmetic coder 8011 perform the attribute encoding. The attribute encoding according to the embodiments is the same as or similar to the attribute encoding described with reference to FIGS. 1 to 6, and thus a detailed description thereof is omitted.

The color transform processor 8008 according to the embodiments performs color transform coding to transform color values included in attributes. The color transform processor 8008 may perform color transform coding based on the reconstructed geometry. The reconstructed geometry is the same as described with reference to FIGS. 1 to 9. Also, it performs an operation and/or method the same as or similar to the operation and/or method of the color transformer 30006 described with reference to FIG. 3 is performed. A detailed description thereof is omitted.

The attribute transform processor 8009 according to the embodiments performs attribute transformation to transform the attributes based on the reconstructed geometry and/or the positions on which geometry encoding is not performed. The attribute transform processor 8009 performs an operation and/or method the same as or similar to the operation and/or method of the attribute transformer 30007 described with reference to FIG. 3. A detailed description thereof is omitted. The prediction/lifting/RAHT transform processor 8010 according to the embodiments may code the transformed attributes by any one or a combination of RAHT coding, prediction transform coding, and lifting transform coding. The prediction/lifting/RAHT transform processor 8010 performs at least one of the operations the same as or similar to the operations of the RAHT transformer 30008, the LOD generator 30009, and the lifting transformer 30010 described with reference to FIG. 3. In addition, the prediction transform coding, the lifting transform coding, and the RAHT transform coding are the same as those described with reference to FIGS. 1 to 9, and thus a detailed description thereof is omitted.

The arithmetic coder 8011 according to the embodiments may encode the coded attributes based on the arithmetic coding. The arithmetic coder 8011 performs an operation and/or method the same as or similar to the operation and/or method of the arithmetic encoder 300012.

The transmission processor 8012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 8007 according to the embodiments may generate and/or process the signaling information and transmit the same to the transmission processor 8012. According to embodiments, the elements to perform geometry encoding and the elements to perform attribute encoding may share data/information with each other as indicated by dotted lines. The transmission processor 8012 according to the embodiments may perform an operation and/or transmission method the same as or similar to the operation and/or transmission method of the transmitter 10003. Details are the same as those described with reference to FIGS. 1 and 2, and thus a description thereof is omitted.

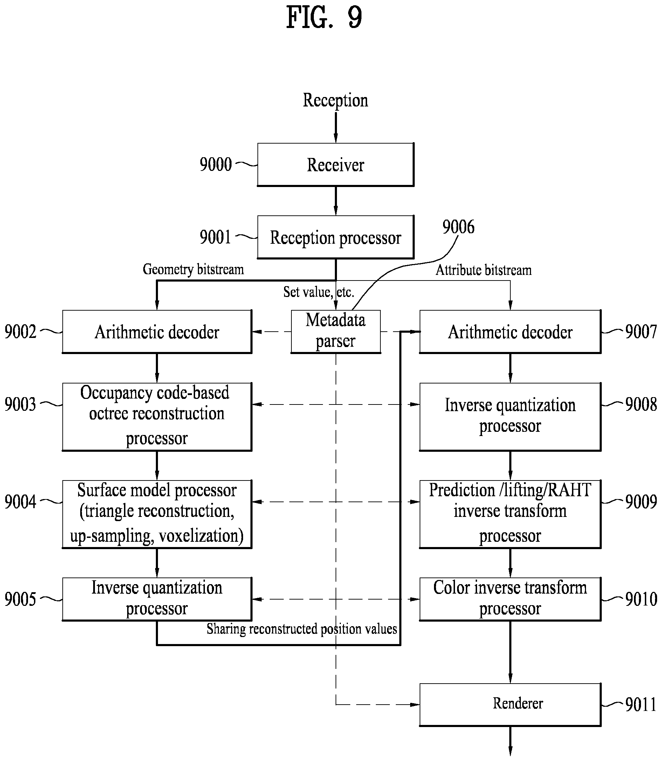

FIG. 9 illustrates a reception device according to embodiments.

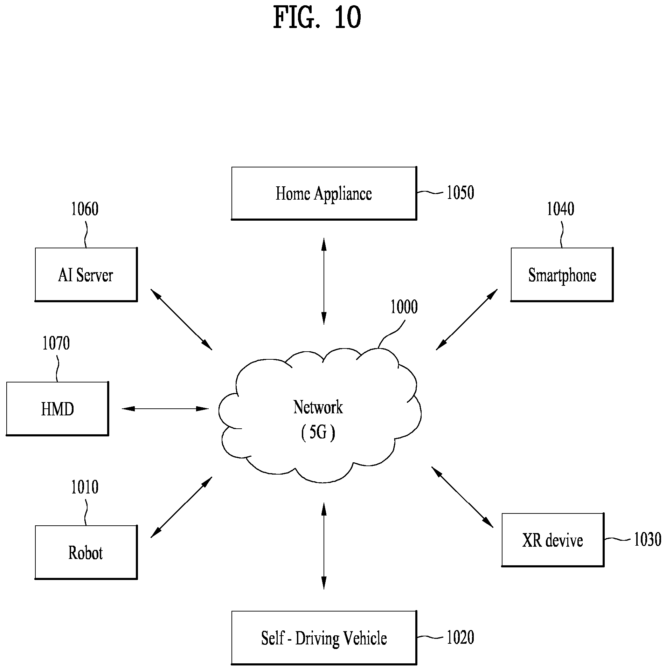

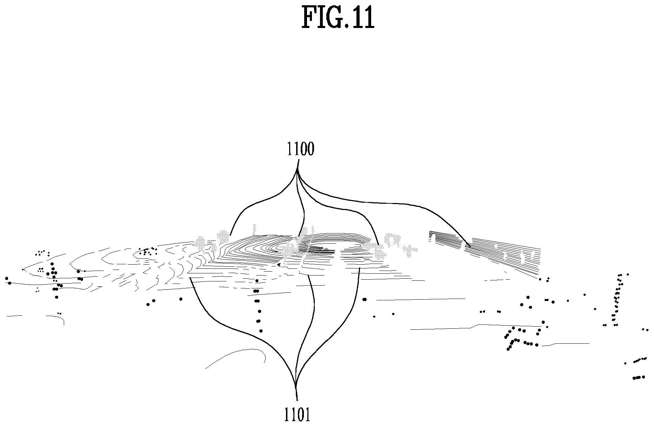

The reception device illustrated in FIG. 9 is an example of the reception device 10004 of FIG. 1 (or the point cloud decoder of FIGS. 10 and 11). The reception device illustrated in FIG. 9 may perform one or more of the operations and methods the same as or similar to those of the point cloud decoder described with reference to FIGS. 1 to 11.

The reception device according to the embodiment may include a receiver 9000, a reception processor 9001, an arithmetic decoder 9002, an occupancy code-based octree reconstruction processor 9003, a surface model processor (triangle reconstruction, up-sampling, voxelization) 9004, an inverse quantization processor 9005, a metadata parser 9006, an arithmetic decoder 9007, an inverse quantization processor 9008, a prediction/lifting/RAHT inverse transform processor 9009, a color inverse transform processor 9010, and/or a renderer 9011. Each element for decoding according to the embodiments may perform a reverse process to the operation of a corresponding element for encoding according to the embodiments.

The receiver 9000 according to the embodiments receives point cloud data. The receiver 9000 may perform an operation and/or reception method the same as or similar to the operation and/or reception method of the receiver 10005 of FIG. 1. The detailed description thereof is omitted.

The reception processor 9001 according to the embodiments may acquire a geometry bitstream and/or an attribute bitstream from the received data. The reception processor 9001 may be included in the receiver 9000.

The arithmetic decoder 9002, the occupancy code-based octree reconstruction processor 9003, the surface model processor 9004, and the inverse quantization processor 905 may perform geometry decoding. The geometry decoding according to embodiments is the same as or similar to the geometry decoding described with reference to FIGS. 1 to 10, and thus a detailed description thereof is omitted.

The arithmetic decoder 9002 according to the embodiments may decode the geometry bitstream based on arithmetic coding. The arithmetic decoder 9002 performs an operation and/or coding the same as or similar to the operation and/or coding of the arithmetic decoder 7000.

The occupancy code-based octree reconstruction processor 9003 according to the embodiments may reconstruct an octree by acquiring an occupancy code from the decoded geometry bitstream (or information about the geometry secured as a result of decoding). The occupancy code-based octree reconstruction processor 9003 performs an operation and/or method the same as or similar to the operation and/or octree generation method of the octree synthesizer 7001. When the trisoup geometry encoding is applied, the surface model processor 9004 according to the embodiments may perform trisoup geometry decoding and related geometry reconstruction (e.g., triangle reconstruction, up-sampling, voxelization) based on the surface model method. The surface model processor 9004 performs an operation the same as or similar to that of the surface approximation synthesizer 7002 and/or the geometry reconstructor 7003.

The inverse quantization processor 9005 according to the embodiments may inversely quantize the decoded geometry.

The metadata parser 9006 according to the embodiments may parse metadata contained in the received point cloud data, for example, a set value. The metadata parser 9006 may pass the metadata to geometry decoding and/or attribute decoding. The metadata is the same as that described with reference to FIG. 8, and thus a detailed description thereof is omitted.

The arithmetic decoder 9007, the inverse quantization processor 9008, the prediction/lifting/RAHT inverse transform processor 9009 and the color inverse transform processor 9010 perform attribute decoding. The attribute decoding is the same as or similar to the attribute decoding described with reference to FIGS. 1 to 10, and thus a detailed description thereof is omitted.

The arithmetic decoder 9007 according to the embodiments may decode the attribute bitstream by arithmetic coding. The arithmetic decoder 9007 may decode the attribute bitstream based on the reconstructed geometry. The arithmetic decoder 9007 performs an operation and/or coding the same as or similar to the operation and/or coding of the arithmetic decoder 7005.

The inverse quantization processor 9008 according to the embodiments may inversely quantize the decoded attribute bitstream. The inverse quantization processor 9008 performs an operation and/or method the same as or similar to the operation and/or inverse quantization method of the inverse quantizer 7006.

The prediction/lifting/RAHT inverse transform processor 9009 according to the embodiments may process the reconstructed geometry and the inversely quantized attributes. The prediction/lifting/RAHT inverse transform processor 9009 performs one or more of operations and/or decoding the same as or similar to the operations and/or decoding of the RAHT transformer 7007, the LOD generator 7008, and/or the inverse lifter 7009. The color inverse transform processor 9010 according to the embodiments performs inverse transform coding to inversely transform color values (or textures) included in the decoded attributes. The color inverse transform processor 9010 performs an operation and/or inverse transform coding the same as or similar to the operation and/or inverse transform coding of the color inverse transformer 7010. The renderer 9011 according to the embodiments may render the point cloud data.

FIG. 10 illustrates an exemplary structure operable in connection with point cloud data transmission/reception methods/devices according to embodiments.

The structure of FIG. 10 represents a configuration in which at least one of a server 1060, a robot 1010, a self-driving vehicle 1020, an XR device 1030, a smartphone 1040, a home appliance 1050, and/or a head-mount display (HMD) 1070 is connected to the cloud network 1000. The robot 1010, the self-driving vehicle 1020, the XR device 1030, the smartphone 1040, or the home appliance 1050 is called a device. Further, the XR device 1030 may correspond to a point cloud data (PCC) device according to embodiments or may be operatively connected to the PCC device.

The cloud network 1000 may represent a network that constitutes part of the cloud computing infrastructure or is present in the cloud computing infrastructure. Here, the cloud network 1000 may be configured using a 3G network, 4G or Long Term Evolution (LTE) network, or a 5G network.

The server 1060 may be connected to at least one of the robot 1010, the self-driving vehicle 1020, the XR device 1030, the smartphone 1040, the home appliance 1050, and/or the HMD 1070 over the cloud network 1000 and may assist in at least a part of the processing of the connected devices 1010 to 1070.

The HMD 1070 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1010 to 1050 to which the above-described technology is applied will be described. The devices 1010 to 1050 illustrated in FIG. 10 may be operatively connected/coupled to a point cloud data transmission device and reception device according to the above-described embodiments.

<PCC+XR>

The XR/PCC device 1030 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1030 may analyze 3D point cloud data or image data acquired through various sensors or from an external device and generate position data and attribute data about 3D points. Thereby, the XR/PCC device 1030 may acquire information about the surrounding space or a real object, and render and output an XR object. For example, the XR/PCC device 1030 may match an XR object including auxiliary information about a recognized object with the recognized object and output the matched XR object.

<PCC+XR+Mobile phone>

The XR/PCC device 1030 may be implemented as a mobile phone 1040 by applying PCC technology.

The mobile phone 1040 may decode and display point cloud content based on the PCC technology.

<PCC+Self-driving+XR>

The self-driving vehicle 1020 may be implemented as a mobile robot, a vehicle, an unmanned aerial vehicle, or the like by applying the PCC technology and the XR technology.

The self-driving vehicle 1020 to which the XR/PCC technology is applied may represent a self-driving vehicle provided with means for providing an XR image, or a self-driving vehicle that is a target of control/interaction in the XR image. In particular, the self-driving vehicle 1020 which is a target of control/interaction in the XR image may be distinguished from the XR device 1030 and may be operatively connected thereto.

The self-driving vehicle 1020 having means for providing an XR/PCC image may acquire sensor information from sensors including a camera, and output the generated XR/PCC image based on the acquired sensor information. For example, the self-driving vehicle 1020 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

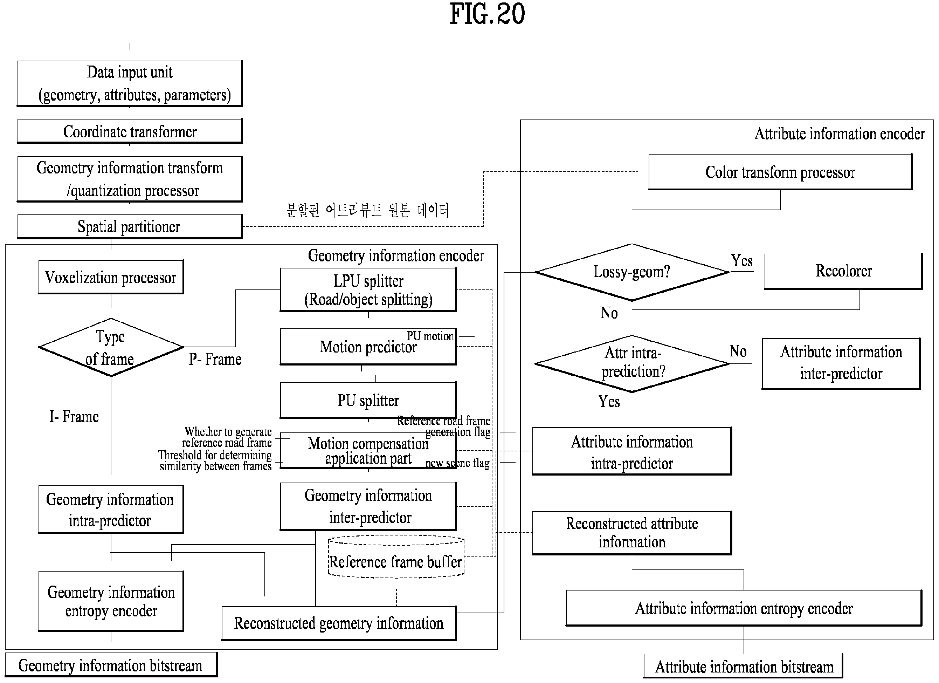

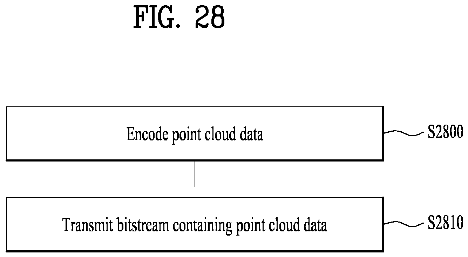

The point cloud data transmission method/device according to embodiments may be construed as a term referring to the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the device of FIG. 10, the encoder of FIG. 20, the transmission method of FIG. 28, and the like.

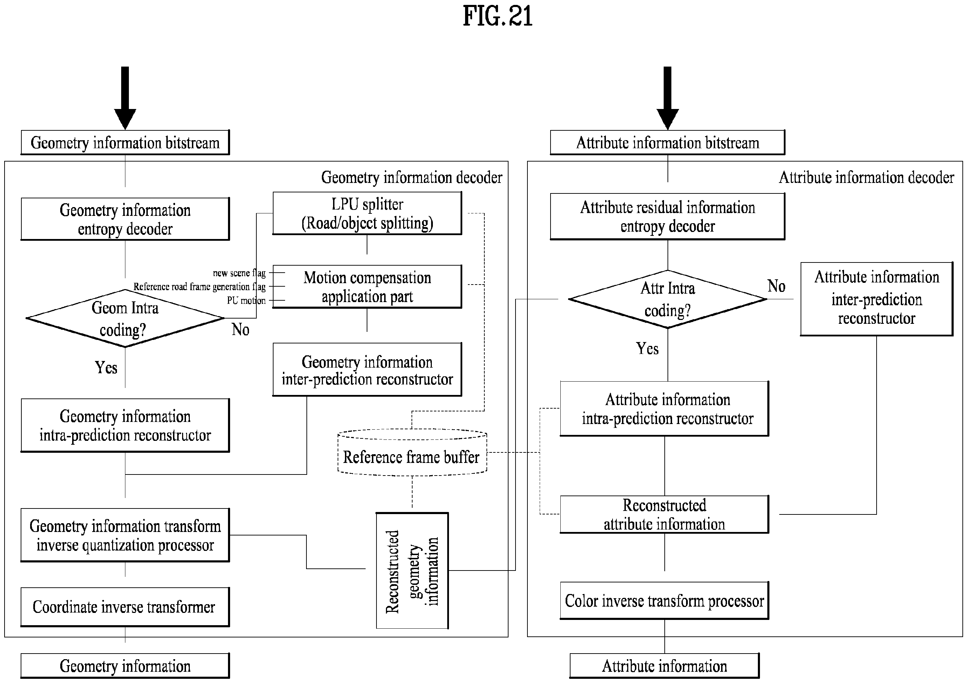

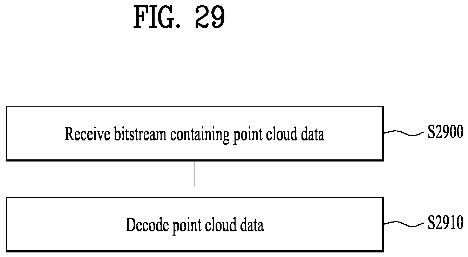

The point cloud data reception method/device according to embodiments may be construed as a term referring to the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIG. 7, the reception device of FIG. 9, the device of FIG. 10, the decoder of FIG. 21, the reception method of FIG. 29, and the like.

The method/device for transmitting or receiving point cloud data according to the embodiments may be referred to simply as a method/device.

According to embodiments, geometry data, geometry information, position information, and geometry constituting point cloud data are to be construed as having the same meaning. Attribute data, attribute information, and the like constituting the point cloud data are to be construed as having the same meaning.

The method/device according to the embodiments may include and carry out a method to generate reference road frame from the multiple point cloud frames captured by LiDAR.

Embodiments include a method to generate reference road frame to efficiently support inter-prediction of point cloud content captured by LiDAR equipment on a moving vehicle for efficient geometry compression in geometry-based point cloud compression (G-PCC). The reference road frame may be used for both geometry compression and attribute compression. Embodiments may include, for example, a reference road frame generation method and/or signaling method.

Embodiments relate to a method to increase compression efficiency of geometry-based point cloud compression (G-PCC) for compressing 3D point cloud data. Hereinafter, an encoder or an encoding device is referred to as an encoder, and a decoder or a decoding device is referred to as a decoder.

A point cloud is composed of a set of points, and each of the points may have geometry information and attribute information. The geometry information is three-dimensional position (XYZ) information, and the attribute information is values of colors (RGB, YUV, etc.) and/or reflectance.

In the G-PCC encoding operation, the point cloud may be split into tiles based on regions, and each tile may be split into slices for parallel processing. The operation may include compressing geometry on a per-slice basis, and compressing the attribute information based on reconstructed geometry (decoded geometry) configured with position information changed by the compression.

The G-PCC decoding operation may include decoding the geometry based on an encoded slice-level geometry bitstream and attribute bitstream received, and decoding the attribute information based on the reconstructed geometry obtained through the decoding (see FIG. 1, etc.).

An octree-based, predictive tree-based, or trisoup-based compression technique may be used to compress the geometry information (see FIGS. 1, etc.).

Embodiments include a method of generating a reference road frame to increase efficiency of inter-prediction-based compression of content captured by LiDAR equipment on a moving vehicle.

FIG. 11 illustrates an example of a road point cloud captured by LiDAR equipment on a moving vehicle according to embodiments.

The point cloud data transmission method/device according to the embodiments (the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the device of FIG. 10, the encoder of FIG. 20, and the transmission method of FIG. 28) and the point cloud data reception method/device according to the embodiments (the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIG. 7, the reception device of FIG. 9, the device of FIG. 10, the decoder of FIG. 21, and the reception method of FIG. 29) may process the road point cloud of FIG. 11. The point cloud acquirer 10001 of FIG. 1 may acquire a point cloud such as the point cloud of FIG. 11.

The content captured by the LiDAR equipment on a moving vehicle according to the embodiments may include both roads and objects. Points 1100 may correspond to objects, and points 1101 may correspond to roads. The object may be a building on a road, for example.

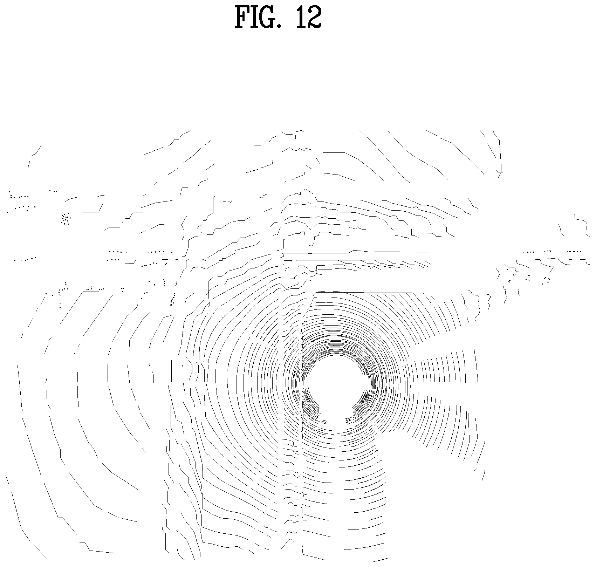

FIG. 12 illustrates an example of a separated road point cloud according to embodiments.

The captured road point cloud described in FIG. 11 may be organized as shown in FIG. 12.

The captured points in the point cloud of captured roads and objects may have different characteristics between consecutive frames. Furthermore, inter-prediction may be performed by separating only the roads from the point cloud including the roads and objects. In other words, FIG. 12 shows a point cloud with only the roads separated from the point cloud of FIG. 11.

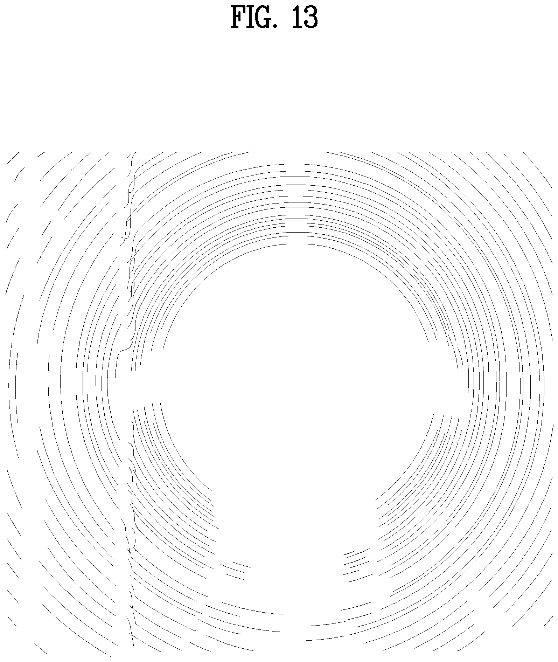

FIG. 13 illustrates an example of road points captured by LiDAR according to embodiments.

For a road captured by LiDAR equipment, as in FIGS. 11 and 12, the relative height from the capture equipment may be constant. In this case, the points may be generated in a circle around a center point, which is the position of the sensor, as shown in FIG. 13.

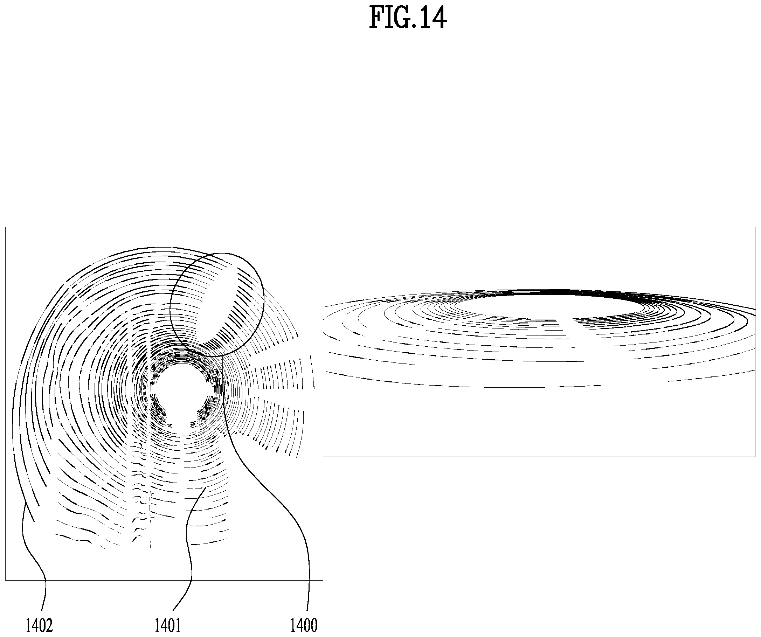

FIG. 14 illustrates an example in which a shape is partially changed when a vehicle equipped with LiDAR equipment according to embodiments that does not move, but objects around the vehicle move.

For the point cloud, as shown in FIGS. 11, 12, 13, and the like, there are buildings, cars, people, and other objects on the road, and the objects may cause some points to be present and others to be absent even if only the road is separated from the points captured by the LiDAR equipment. For example, in a circular area 1400 in FIG. 14, it may be observed that points 1401 present in the area disappears, and points 1402 that was absent appears. In other words, the circular area 1400 has an area where points are present and areas where points are absent. The other areas are nearly identical. This distribution of the point cloud implies the following. The vehicle with the LiDAR equipment is not moving, and there is a moving object in the area, which is causing a portion of the road to be hidden. The points 1401 are the points in the previous frame and the points 1402 are the points in the current frame. In other words, the vehicle containing the LiDAR equipment is stationary and generates a frame containing points for the road and the object, and the points contained in the currently captured frame and in a frame captured and generated prior to the current frame may appear as shown in FIG. 14. As the object around the vehicle moves, a missing area 1400 is generated.

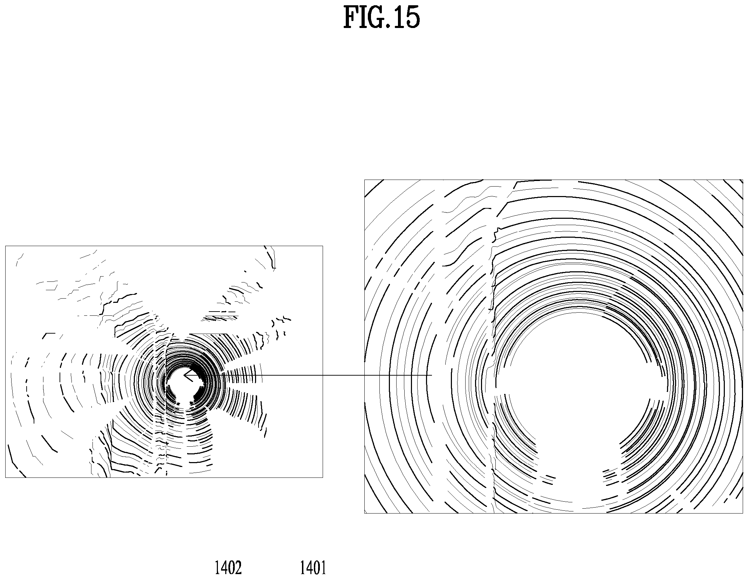

FIG. 15 illustrates an example of a point cloud acquired when a vehicle provided with LiDAR equipment according to embodiments turns right.

The point cloud captured by the LiDAR as in FIGS. 11, 12, 13, 14, etc., may include an example such as FIG. 15. As shown in FIG. 14, the points 1401 of the previous frame and/or the points 1402 of the current frame may be organized as shown in FIG. 15.

For example, as shown in FIG. 15, there may be a case where a road is captured, but the road is not fully visible due to a building. A building may be present at a certain portion of an intersection and captured road points may be absent due to the building. However, the road point cloud may be affected by the building object and the overall shape thereof may be affected when there is a movement. In this way, the road may be affected by the objects. In other words, objects may cause missing points of the road. When the road points from the previous frame are used as a reference frame in this condition, there may not be enough information allowing an accurate prediction to be performed for the current frame. Therefore, it is necessary to generate a reference road frame by finding information from a previous frame that may supplement the information about the road.

To perform inter-prediction on content captured by LiDAR equipment, interpredictive coding may be applied to fine a predicted point in the reference frame and transmit a residual from the predicted point. Thus, the method/device according to the embodiments may effectively reduce the difference between the reference frame and the current frame. In particular, as the road area, which is stationary, is filled with road information based on the latest information to maintain all the optimal information, the residual value may be reduced by finding the best point to match the point in the current frame.

If there is no point in the reference frame that matches the point in the current frame (e.g., with the same laser ID, azimuth angle, and radius) at the same position, the residual will increase because a neighbor point that is determined to be the most appropriate point (e.g., with the same laser ID and the closest azimuth angle) will be set as a predicted point. The increased residual may result in a larger bitstream. Therefore, a method to maintain information on the stationary roads optimally may be needed. Also, because simple point accumulation requires a lot of memory, a method that considers efficient memory usage may be needed.

Embodiments include a reference road frame generation method to efficiently support compression through efficient inter-prediction of content captured by LiDAR equipment on a moving vehicle. Embodiments may be modified and combined. As used herein, terms are to be understood based on their intended meaning, to the extent widely used in the art.

Motion detection of the road may be performed by the geometry encoder of the PCC encoder and applied to the road through the geometry decoding operation of the PCC decoder for reconstruction. The reference road frame may also be utilized for attribute reconstruction.

Embodiments may include 1) a method to process road point cloud data that is not captured, 2) a method to generate a reference road frame in the absence of global motion, 3) a method to generate a reference road frame in the presence of translation motion only, 4) a method to generate a reference road frame in the presence of translation motion and rotation motion, 5) a method to generate a reference road frame in the presence of rotation motion only, and 6) a method to initialize a reference road frame. Hereinafter, each operation is described with reference to the respective drawings.

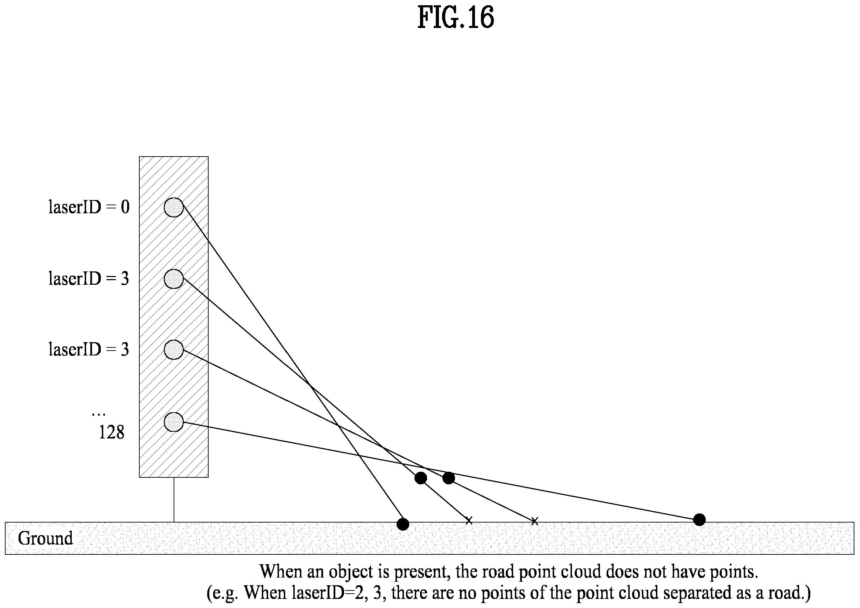

FIG. 16 illustrates an example of a point cloud captured by LiDAR equipment according to embodiments.

The point clouds of FIGS. 11, 12, 13, 14, and/or 15 may be captured by LiDAR, as shown in FIG. 16. The transmission device of FIG. 1 may capture points including roads/objects, generate frames containing the points. The points contained in the frames may be compressed, transmitted, received, and reconstructed.

The LiDAR according to the embodiments may include multiple sensors. Each sensor has a laser ID (laserId). Each sensor has information about a height, angle, and rotation speed with respect to the sensor center. As the angle of the sensor increases, the radius of the road captured may increase. When the sensor has the smallest angle, it may be disposed at the top of the LiDAR equipment, and the points of the road with the smallest radius may be captured (See FIG. 16). When the point cloud is separated into roads and objects, the separated point cloud may not have points for any sensors. As shown in FIG. 16, for laserID equal to 2 and 3, the laser does not reach the ground due to the presence of an object. Rather, it may reach the object first and reflect off of the object, and may be separated into an object point cloud. In this case, when the road and object are separated, there may be no points for laserID equal to 2 and 3 in the road point cloud. That is, there may be a missing area caused by the object for the corresponding area in the road frame.

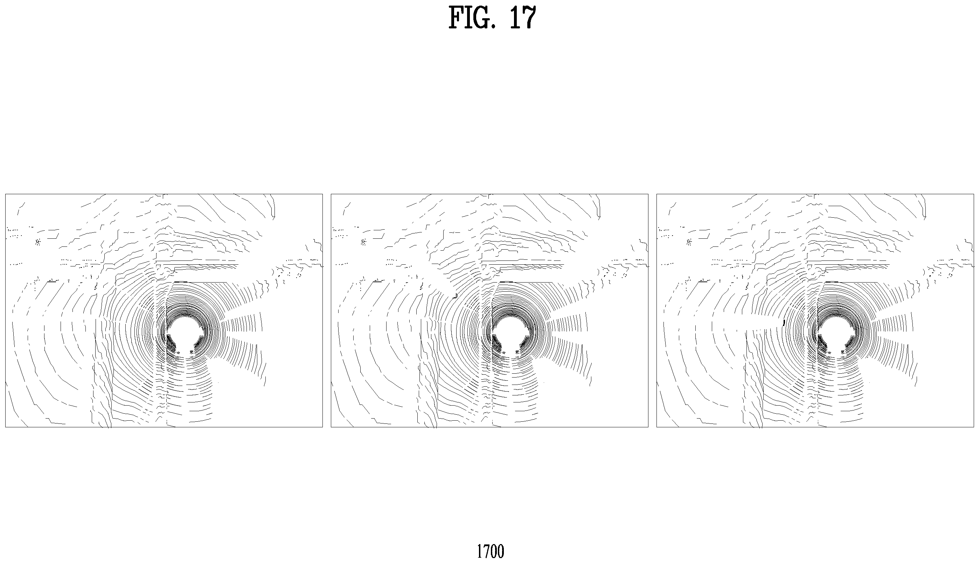

FIG. 17 illustrates an example of road points being changed by a moving object according to embodiments.

When the vehicle and/or mobile apparatus capturing the point cloud with the LiDAR equipment is stationary and another vehicle object 1700 passes by, the missing road points caused by the passing vehicle may change in the road point cloud.

For example, when a cluster of circularly distributed points is a vehicle or mobile equipment performing a LiDAR capture, and an object 1700 located in the vicinity moves, the change in distance and/or position between the LiDAR and the object 1700 may result in a missing area in the road frame during the LiDAR capture, as shown in FIG. 17.

As such, in the absence of global motion, a method to generate a reference road frame that has been changed due to a moving object may be carried out as follows. The reference road frame generation method according to the embodiments may be carried out by both the point cloud data transmission method/device according to the embodiments (the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the device of FIG. 10, the encoder of FIG. 20, and the transmission method of FIG. 28) and the point cloud data reception method/device according to the embodiments (the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIG. 7, the reception device of FIG. 9, the device of FIG. 10, the decoder of FIG. 21, and the reception method of FIG. 29).

The reference road frame generation method according to the embodiments may include operations of 1) setting a previous road frame as a reference road frame, and/or 2) encoding or decoding a current frame based on the reference frame. In the encoding or decoding, 2-1) a condition for a point missing area in the current road frame may be retrieved, 2-2) a point may be searched for in the reference frame based on the condition, and 2-3) when the point is present in the reference frame, the missing area of the current road frame may be updated based on the point. Then, the current (road) frame updated based on the reference (road) frame becomes the reference frame for the next frame, and the next frame, which becomes the current frame, may be predictively encoded and predictively decoded based on the updated reference frame.

For example, 1) when there is no reference road frame, the previous road frame may be set as the reference road frame. 2) In the IPPP mode, when the current frame is the N-th frame, the reference road frame may be referenced for encoding/decoding. Generally, the N-1-th road may be referenced. Before encoding the N+1-th frame, the following operation may be performed. When there is no global motion between the N-th and N-1-th frames, namely, the LiDAR-equipped vehicle is standing still, The laserID and angle values having no points in the N-th road frame may be searched for, and the reference road frame may be searched to check if the points are present therein. When the points are present, the N-th road frame may be updated with the points, and the updated N-th road frame may be updated to the reference road frame, which may be referenced when encoding/decoding the N+1-th frame. Alternatively, the reference road frame may search for laserIDs and angle values that do not have points, the N-th road frame may be search for presence of these points therein. When the points are present, the reference road frame may be updated with the points and referenced when encoding/decoding the N+1-th frame.

Thereby, the influence of objects/motion, etc. that have occurred in the reference road frame may be removed, and issues such as memory burden and reduced prediction accuracy that may be caused by the influence may be addressed, enabling accurate and fast predictive encoding/decoding of road frames.

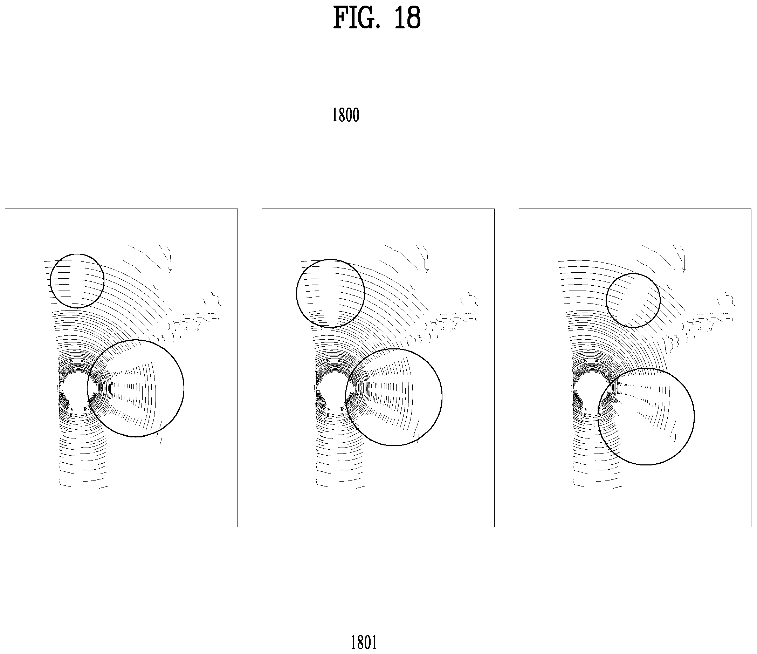

FIG. 18 illustrates an example of road points being changed when there is only translation motion according to embodiments.

The point clouds as shown in FIGS. 11, 12, 13, 14, 15, 16, 17, etc. may have an example as shown in FIG. 18.

For example, when the vehicle and/or mobile apparatus capturing a point cloud with the LiDAR equipment has only translation motion, the stationary objects 1801 may move in the opposite direction to the travel direction. For a moving object 1800, the opposite direction to the travel direction and its direction of travel may coexist.

When there is only translation motion, the method to generate a reference road frame that is changed due to stationary and moving objects may be carried out as follows. Similarly, the reference road frame generation method may be carried out by both the transmission device and the reception device.

The method to generate a reference road frame according to the embodiments may include 1) setting a previous road frame as a reference road frame, 2-1) changing an origin in the reference road frame, transforming a coordinate system to a spherical coordinate system, and calculating captured points per laser ID, 2-2) searching for an area with a missing point in the previous road frame based on a specific condition, and updating the previous road frame based on the point in the reference road frame, and 2-3) encoding or decoding a current road frame with reference to the updated previous road frame.

For example, 1) when there is no reference road frame, the previous road frame may be set as the reference road frame. 2) In the IPPP mode, when the current frame is the N-th frame, the reference road frame may be referenced for encoding/decoding. Generally, the N-1-th road may be referenced. Before encoding the N+1-th frame, the following operation may be performed. When there is only global translation motion between the N-th and N-1-th frames, the origin value may be changed in the reference road frame and the spherical coordinates may be recalculated to calculate the captured points per laserID. The laserID and angle values having no points in the N-th road frame may be searched for, and the reference road frame may be searched to check if the points are present therein. When the points are present, the N-th road frame may be updated with the points, and the updated N-th road frame may be updated to the reference road frame. The updated N-th road frame may be updated to the reference road frame, and referenced when encoding/decoding the N+1-th frame.

Thereby, the influence of objects/motion, etc. that have occurred in the reference road frame may be removed, and issues such as memory burden and reduced prediction accuracy that may be caused by the influence may be addressed, enabling accurate and fast predictive encoding/decoding of road frames.

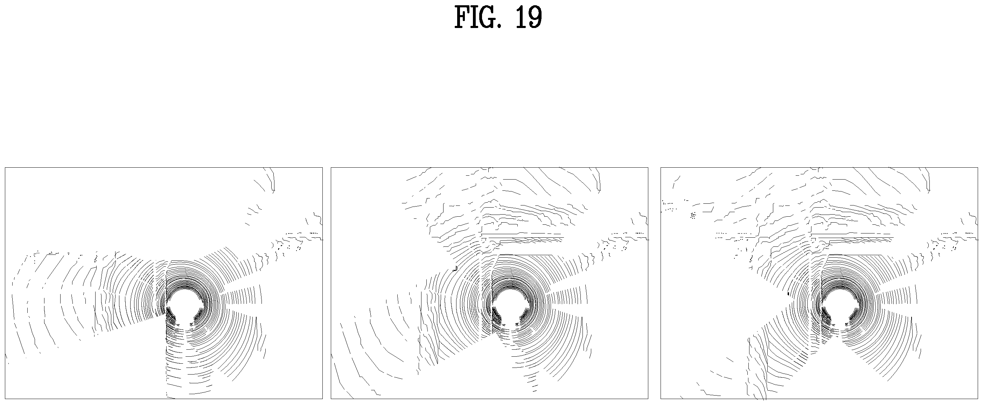

FIG. 19 illustrates an example of road points being changed when there are translation motion and rotation motion according to embodiments.

Point clouds as shown in FIGS. 11, 12, 13, 14, 15, 16, 17, 18, etc. may have an example as shown in FIG. 19.

That is, FIG. 19 illustrates a case where the vehicle and/or mobile apparatus capturing a point cloud with the LiDAR equipment has translation motion and rotation motion.

Where there are translation motion and rotation motion, a method to generate a reference road frame that is changed due to stationary and moving objects may be as carried out as described below. Similarly, The reference road frame generation method may be carried out by both the transmission device and the reception device.

The method to generate a reference road frame according to the embodiments may include 1) setting a previous road frame as a reference road frame, 2-1) changing an origin in the reference road frame, rotating points, transforming a coordinate system to a spherical coordinate system, and calculating captured points per laser ID, 2-2) searching for a laser ID and/or an angle for an area having no points in the previous road frame, searching for the points in the reference road frame, and updating the reference road frame based on the found points, and 2-3) encoding/decoding the next road frame based on the updated reference road frame.

For example, 1) when there is no reference road frame, the previous road frame may be set as the reference road frame. 2) In the IPPP mode, when the current frame is the N-th frame, the reference road frame may be referenced for encoding/decoding. Generally, the N-1-th road may be referenced. Before encoding the N+1-th frame, the following operation may be performed. When there are global translation and rotation motions between the N-th and N-1-th frames, the origin value may be changed in the reference road frame, the points may be rotated as much as the rotation in the reference road frame, and the spherical coordinates may be recalculated to calculate the captured points per laserID. The laserID and angle values having no points in the N-th road frame may be searched for, and the reference road frame may be searched to check if the points are present therein. When the points are present, the N-th road frame may be updated with the points, and the updated N-th road frame may be updated to the reference road frame. The updated N-th road frame may be updated to the reference road frame, and referenced when encoding/decoding the N+1-th frame.

Thereby, the influence of objects/motion, etc. that have occurred in the reference road frame may be removed, and issues such as memory burden and reduced prediction accuracy that may be caused by the influence may be addressed, enabling accurate and fast predictive encoding/decoding of road frames.

Where there is only rotation motion, the reference road frame may be generated as follows.

When the vehicle and/or mobile apparatus capturing the point cloud with LiDAR equipment has only rotation motion, the method to generate a reference road frame that is changed due to stationary and moving objects may be carried out as follows. Similarly, the reference road frame generation method may be carried out by both the transmission device and the reception device.

The method to generate a reference road frame according to the embodiments includes 1) setting a previous road frame as a reference road frame, 2-1) rotating points in the reference road frame, transforming a coordinate system to a spherical coordinate system, calculating captured points per laser ID, and searching for a laser ID and/or an angle for an area having no points, 2-2) updating a next road frame based on the found points in the reference road frame, the updated next road frame becoming a reference road frame, and encoding and decoding the next road frame of the reference road frame based on the updated reference road frame.

For example, 1) when there is no reference road frame, the previous road frame may be set as the reference road frame. 2) In the IPPP mode, when the current frame is the N-th frame, the reference road frame may be referenced for encoding/decoding. Generally, the N-1-th road may be referenced. Before encoding the N+1-th frame, the following operation may be performed. When there is only global rotation motion between the N-th and N-1-th frames, the frame may be rotated as much as rotation of the points in the reference road frame, and then the spherical coordinates may be recalculated to calculate the captured points per laserID. The laserID and angle values having no points in the N-th road frame may be searched for, and the reference road frame may be searched to check if the points are present therein. When the points are present, the N-th road frame may be updated with the points, and the updated N-th road frame may be updated to the reference road frame. The updated N-th road frame may be updated to the reference road frame, and referenced when encoding/decoding the N+1-th frame. Alternatively, the current frame may be rotated in the opposite direction of rotation, and then the laserID and angle values for missing points may be fille from the reference frame.

Thereby, the influence of objects/motion, etc. that have occurred in the reference road frame may be removed, and issues such as memory burden and reduced prediction accuracy that may be caused by the influence may be addressed, enabling accurate and fast predictive encoding/decoding of road frames.

Further, the method/device for transmitting/receiving point cloud data according to the embodiments may include a method to generate a reference road frame and/or a method to initialize the reference road frame.

When the reference road frame and the current frame differ significantly, the encoder may, for example, calculate a similarity score, generate a flag that may indicate that a new scene is given with no correlation between the two frames, and deliver the flag to the decoder as signaling information. In this case, both the encoder and the decoder may skip reference frame update. In other words, the reference road frame is not used to predict the current road frame when the scene changes. Accordingly, an issue of a memory burden may be addressed when the scene changes.

For example, referring to FIGS. 17 to 19, terms such as next, current, and previous for multiple frames may be described in various ways depending on the reference. For example, For example, when N is the current frame and N-1 is the previous frame, they may be described as follows. Because embodiments include generating a reference road frame, they include a method of updating the reference road frame for encoding/decoding of the next N+1 from the current frame. This operation allows the current frame (N) to be updated before encoding/decoding the next frame (N+1) in order to reduce memory consumption. That is, the current frame may be encoded/decoded and its data may be updated for the next frame through the previous frame N-1. Since the current frame N already has the previous frame (= reference frame N-1), frame N-1 may be deleted by updating the road in the current frame with reference to N-1.

In other words, when the current frame has already been encoded, and then the current frame N has a missing point for the next frame N+1, the previous reference road frame N-1 may be taken to update N. The updated information may then be used in N+1.

FIG. 20 illustrates a point cloud data transmission device according to embodiments.

FIG. 20 illustrates a configuration of a device (the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the device of FIG. 10, the encoder of FIG. 20, and the transmission method of FIG. 28) for carrying out the point cloud data transmission method according to the embodiments. Each component may correspond to hardware, software, a processor, and/or a combination thereof. A description of the operation of each component may conform to the description of the above-described embodiments.

The PCC data may be input to an encoder (which may be referred to as an encoding device, a transmission device, or the like) and encoded to output a geometry information bitstream and an attribute information bitstream.

A geometry information encoding part (or geometry information encoder, geometry encoder, etc.) according to the embodiments may be configured as shown in FIG. 20.

The geometry information encoder according to the embodiments may correspond to the point cloud video encoder, encoding, point cloud encoder, or component(s) for encoding point cloud video of FIG. 1.

The geometry information encoding part may split roads and objects through a road/object splitter. When the type of the frame is P-frame, the frame may be processed through an LPU splitter and global motion may be predicted through a motion predictor. Then, an area that needs to be split may be split through a PU splitter, and local motion may be predicted through the motion predictor. This procedure may continue until no more splitting is needed or up to a specified level. Signaling information related to whether to perform LPU/PU splitting and the predicted motion for each LPU/PU may be generated and may be included in a bitstream and signaled to the decoder.

The motion predictor may signal the PU motion to the decoder. In other words, it may generate a PU motion-related parameter and transmit the same in the bitstream to the decoder.

A motion compensation application part may receive an input related to whether a reference road frame is generated, and may generate a parameter related to whether a reference road frame is generated for a road PU and include the same in the bitstream to be signaled to the decoder. Consecutive frames may be compared for similarity. When the similarity is less than a threshold, the two frames may be defined as different scenes, and a new scene flag (new scene _flag) may be set to TRUE and transmitted to the decoder.

The motion compensation application part may determine through RDO whether to apply the predicted motion to the generated LPUs/PUs, and may apply the motion to the reference frame according to the determination. A parameter related to whether to apply the motion may be generated and included in the bitstream to be signaled to the decoder.

With the compensated points, the geometry information may be compressed by the geometry information inter-predictor and relevant data may be signaled.

The motion predictor may perform the following operations.

An input related to whether to generate a reference road frame for searching for the motion of a road PU may be received. When the reference road frame is generated, a reference road frame generation flag may be signaled to the decoder, as both the encoder and decoder should be updated with the same reference road frame.

The motion compensation application part may perform the following operations.

Depending on the motion of the road PU, whether a reference road frame is used, and whether the scene is new, motion may be applied to the road PU based on the generated reference frame.

When there is no global motion in the road motion, the reference road frame may be updated by finding the points that were not captured at the laserID, as shown in FIG. 17. When there is only translation motion, the coordinates may be recalculated by changing the origin position of the sensor, and the reference road frame may be updated by finding the points that were not captured at the laserID, as shown in FIG. 18. When there are translation/rotation motion, the coordinates may be recalculated by changing the origin position of the sensor, a rotation may be applied, and then the reference road frame may be updated by finding the points that were not captured at the laserID, as shown in FIG. 19. When there is only rotation motion, a rotation may be applied, and then the reference road frame may be updated by finding the points that were not captured at the laserID, as shown in FIG. 20. This operation may be performed by both the encoder and decoder, and prediction may be performed based on the same reference road frame.

A threshold froming the basis of determining the similarity between the reference road frame and the current road frame may be input. When the similarity between the two frames is less than the threshold as a result of comparison between the frames, it is determined that the scene is different, and the new scene flag (new_scene _flag) may be set to TRUE and signaled to the decoder. In this case, the reference road frame may be initialized in both the encoder/decoder.

The reference road frame generation method according to the embodiments described with reference to FIGS. 16, 17, 18, 19, and the like may be carried out by the encoder, the geometry encoder, the LPU splitter, the motion predictor, the PU splitter, the motion compensation application part, the geometry information inter-predictor, and the like of FIG. 20.

The encoder may include a memory storing encoding instructions and a processor connected to the memory, wherein the encoding instructions may be configured to cause the processor to perform an encoding operation.

While the reference road frame generation and reference road frame-based inter-prediction have been described in terms of geometry, the same may be applied to the attribute encoding process.

A data input may receive geometry, attributes, and related parameters. It may receive frames containing points captured by LiDAR or the like.

A coordinate transformer may transform the coordinate system of the points to a suitable coordinate system for encoding.

A geometry information transform quantization processor may quantize the points based on a quantization parameter suitable for encoding.

A spatial splitter may split the points into a space suitable for encoding. The split attributes may be delivered to the attribute encoder.

The geometry encoder may include the following elements.

A voxelization processor may voxelize a point cloud having geometry.

Depending on the type of frame, the geometry encoder may perform splitting and motion prediction/compensation/inter-prediction when the frame is a P-frame, or may perform intra-prediction when the frame is an I-frame.

For the P-frame, the geometry encoder may split roads and objects into largest prediction units (LPUs) through the LPU splitter. For a road frame and object frame, the motion predictor may predict the motion of road points and the motion of object points. The motion predictor may receive signaling information indicating whether to generate a reference road frame for searching for the motion of the road PU, and generate the reference road frame according to the information. For the operation of generating the reference road frame, refer to the description given above.

The PU splitter may split the LPU into PUs. Road PUs and object PUs may be generated, respectively. The LPU and PUs may be configured in various ways depending on the motion prediction/compensation settings.

The motion compensation application part may apply motion to each of the corresponding road PU and object PU based on a reference frame. As described above, the reference frame may be updated to resolve the missing parts, and the motion of the frame may be compensated for based on the updated reference frame to perform inter-prediction. Since the issue raised by the missing parts is addressed, accurate and fast inter-frame prediction may be performed.

The inter-predictor may predict the current frame based on the reference frame after motion compensation, generate a residual between the geometry of the predicted point and the geometry of the current point, and transmit a bitstream whose side is reduced by compressing and entropy encoding only the residual.

The encoded geometry may be reconstructed and delivered to the attribute encoder as the geometry of the point is necessary for attribute encoding.

The geometry encoder may perform intra-frame prediction. Without a reference frame, it may find similar points in the current frame from among neighbor candidates, generate a residual, and entropy-encode the residual.

The attribute encoder may transform attributes to an appropriate color system through a color transform processor.

When the geometry encoding scheme is lossy-based encoding, the attribute encoder may adjust the color through a recolorer to reconstruct the attributes (colors) for the missing geometry. The attribute encoder may skip the recoloring operation when the geometry encoding method is lossless.

In an attribute intra-prediction mode, the attribute encoder may perform intra-frame predictive coding on attribute information. When the mode is not the intra-prediction mode, inter-frame predictive coding may be performed on the attribute information. As in the case of geometry, in the attribute inter-frame mode, attributes in the current frame may be predicted by referencing a reference frame, and may be encoded using the attribute inter-frame method. By predicting the attributes in an inter-prediction and/or intra-prediction manner, a residual may be generated and be entropy-encoded to generate an attribute information bitstream containing attribute information. Further, the encoded attributes may be reconstructed and delivered to a reference frame buffer. The reference frame buffer may store the reconstructed geometry information and/or the reconstructed attribute information, and may provide point (geometry/attribute) information about the reference frame when the next frame is encoded in the inter-prediction manner.

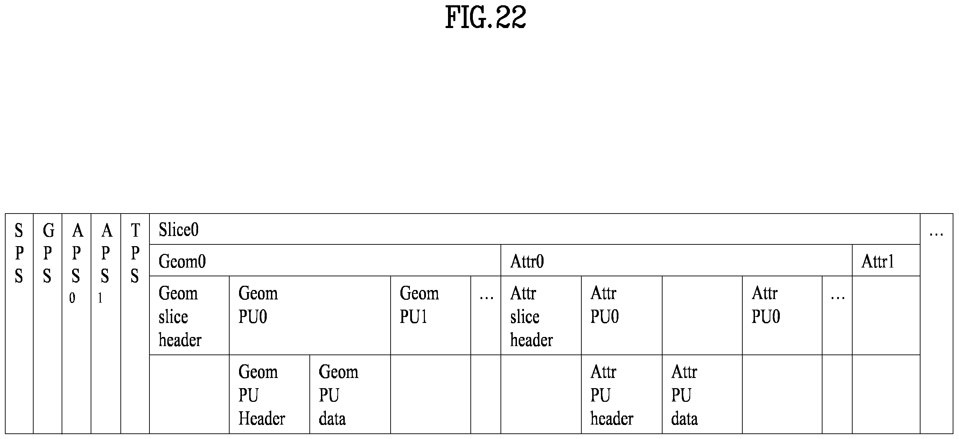

The transmission device may encode the point cloud, generate parameters based on the operation, and generate and transmit a bitstream as shown in FIGS. 22 to 27.

FIG. 21 illustrates a point cloud data receiving device according to embodiments.

FIG. 21 illustrates a configuration of a device (the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIG. 7, the reception device of FIG. 9, the device of FIG. 10, the decoder of FIG. 21, and the reception method of FIG. 29) for carrying out the point cloud data reception method according to the embodiments.

Each component may correspond to hardware, software, a processor, and/or a combination thereof. A description of the operation of each component may conform to the description of the above-described embodiments.

Each operation of the reception device of FIG. 21 corresponds to each operation of the transmission device of FIG. 20, and the reception operation may follow the reverse process to the transmission operation.

An encoded geometry information bitstream and an attribute information bitstream may be input to the decoder, and decoded and reconstructed PCC data may be output from the decoder.

The geometry information decoder according to the embodiments may correspond to the point cloud video decoder, decoding, point cloud decoder, and component(s) for decoding point cloud video of FIG. 1.

The decoder may include a memory storing decoding instructions and a processor connected to the memory, wherein the decoding instructions may be configured to cause the processor to perform a decoding operation.

The motion compensation application part may apply motion to a road PU based on a reference frame generated based on the motion of the transmitted road PU, whether a reference road frame is used, and whether the scene is new.

The geometry information decoder may receive the geometry information bitstream (FIGS. 20 to 27).

The geometry information entropy decoder may decode the geometry information based on an entropy method.

The geometry information decoder may perform the decoding operation based on whether the geometry encoding method is intra-coding or inter-coding. When the geometry encoding method is not geometry intra-coding, the LPU/PU splitter may split the sequence, frame, and the like of the bitstream containing the point cloud into roads and/or objects.

The motion compensation application part may parse a new scene flag, a reference road frame generation flag, a PU motion, and the like from the bitstream and apply motion compensation to units into which the roads/objects are split.

The geometry information inter-prediction reconstructor may predict the roads/objects in the current frame based on the reference frame, and reconstruct the geometry by summing the received residual and the predicted value.

When the geometry encoding method is geometry intra-coding, the predicted value may be reconstructed from the neighbor candidate points that are most similar to the current geometry in the current frame without a reference frame.

The geometry information transform inverse quantization processor may inversely quantize the geometry reconstructed by the intra and/or inter methods based on the quantization parameter. The reconstructed geometry may then be provided for attribute decoding.

The geometry information decoder may decode the geometry information.

The attribute information decoder may decode the received residual through the attribute residual information entropy decoder based on an entropy method.

Depending on whether the attribute coding method is intra-coding or inter-coding, the attribute information decoder may perform corresponding operations.

When the attribute coding method is not intra-coding, the attribute information inter-prediction reconstructor may generate a prediction for the current frame by referencing a reference frame using the inter-prediction method. As in the case of geometry, a reference frame may be generated.

When the attribute coding method is intra-coding, the attribute information intra-prediction reconstructor may generate a prediction from a neighbor candidate with the most similar attributes to the current point in the current frame without a reference frame.

The attribute information decoder may generate reconstructed attribute information. A reference frame buffer may store the reconstructed geometry and reconstructed attributes as geometry and attributes for a reference frame, and provide reference information when predicting the next frame after the reference frame.

The color inverse transform processor may inversely transform the color system.

The attribute information decoder may generate attribute information.

FIG. 22 illustrates a bitstream containing point cloud data and parameters according to embodiments.

A a device (the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the device of FIG. 10, the encoder of FIG. 20, and the transmission method of FIG. 28) for carrying out the point cloud data transmission method according to the embodiments may generates the bitstream of FIG. 22, and a device (the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIG. 7, the reception device of FIG. 9, the device of FIG. 10, the decoder of FIG. 21, and the reception method of FIG. 29) for carrying out the point cloud data reception method according to the embodiments may decode the geometry and/or attributes in the bitstream of FIG. 20 based on the parameters in the bitstream of FIG. 20.

As such, the method/device according to the embodiments may signal related information to add/carry out embodiments. The signaling information according to the embodiments may be used at the transmitting side or the receiving side.

The encoded point cloud may be configured as follows. A point cloud data encoder configured to perform geometry encoding and/or attribute encoding may generate an encoded point cloud (or a bitstream containing the point cloud) as follows. In addition, signaling information related to the point cloud data may be generated and processed by a metadata processor of the point cloud data transmission device and included in the point cloud as follows.

Each abbreviation has the following meaning. Each abbreviation may be referred to by another term within the scope of the equivalent meaning: SPS: Sequence Parameter Set; GPS: Geometry Parameter Set; APS: Attribute Parameter Set; TPS: Tile Parameter Set; Geom: Geometry bitstream = geometry slice header + [geometry PU header + geometry PU data] | geometry slice data; Attr: Attribute bitstream = attribute data unit header + [attribute PU header + attribute PU data] | attribute data unit data. A slice may be referred to as a data unit, a slice header may be referred to as a data unit header; and slice data may be referred to as unit data.

The method/device according to the embodiments may generate reference road frame generation information according to the embodiments and add the same to the SPS, GPS, or TPS to signal the same. The reference road frame generation information may be added to and signaled in the TPS or the geometry data header for each slice. Tiles or slices are provided to allow the point cloud to be partitioned into regions for processing. When the point cloud data is partitioned into regions, an option for generating different sets of neighbor points for the respective regions may be configured to provide a selection method exhibiting low complexity and low reliability of results or a selection method exhibiting high complexity and high reliability. The option may be configured differently according to the capacity of the receiver. Therefore, when the point cloud is divided into tiles, a different option may be applied to each tile. When the point cloud is divided into slices, a different option may be applied to each slice. A geometry PU may be added, and a geometry PU header and geometry PU data may be added.

Hereinafter, the syntax of the parameter sets contained in the bitstream of FIG. 20 is described with reference to the respective drawings.

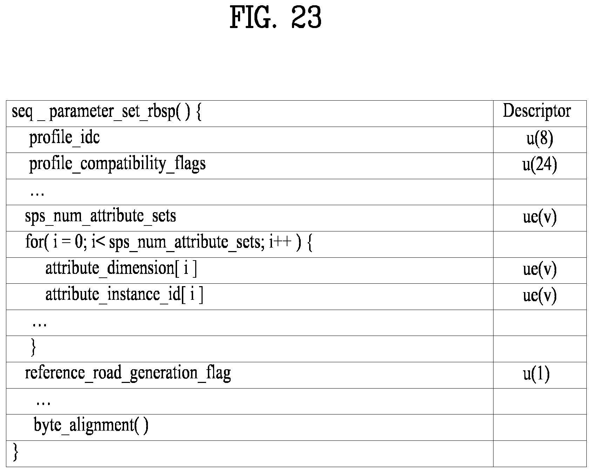

FIG. 23 illustrates a sequence parameter set (SPS) according to embodiments.

The SPS in FIG. 23 represents the SPS contained in the bitstream of FIG. 22. Option information related the generation of the reference road frame may be added to and signaled in the SPS. Thus, efficient signaling may be performed to support inter-prediction of geometry/attributes. As used herein, the names of signaling information may be understood within the scope of the meaning and functionality of the signaling information.

profile_idc: Indicates the profile to which the bitstream conforms. The bitstream shall not contain a value of profile_idc other than the one specified. Other values of profile_idc are reserved for future use by ISO/IEC.

profile _compatibility _flags: profile_compatibility_flags equal to 1 indicates that
sps_num_attribute_sets: sps_num_attribute_sets indicates the number of coded attributes in the bitstream. The value of sps_num_attribute_sets may be in the range of 0 to 63.
attribute_dimension[i]: Indicates the number of components of the i-th attribute.
attribute_instance_id[i]: Indicates the instance ID for the i-th attribute.
reference_road_generation_flag: Indicates whether a reference road is generated in the sequence.

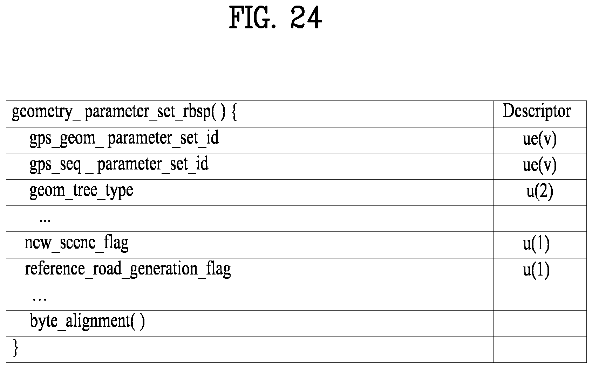

FIG. 24 illustrates a geometry parameter set (GPS) according to embodiments.

The GPS in FIG. 24 represents the GPS contained in the bitstream of FIG. 22. Option information related the generation of the reference road frame may be added to and signaled in the GPS. Thus, efficient signaling may be performed to support inter-prediction of geometry/attributes. As used herein, the names of signaling information may be understood within the scope of the meaning and functionality of the signaling information.

gps_geom_parameter_set_id: Indicates an identifier for the GPS to be referenced by other syntax elements. The value of gps_seq_parameter_set_id may be in the range of 0 to 15.

gps_seq_parameter_set_id: Indicates the value of sps_seq_parameter_set_id for the active SPS. The value of gps_seq_parameter set id may be in the range of 0 to 15.

geom_tree_type: geom_tree_type equal to 0 indicates that the position information is coded using an octree. geom_tree_type equal to 1 indicates that position information is coded using a predictive tree.

new _scene _flag: Indicates whether the frame is a new scene compared to the previous frame.

reference_road_generation_flag: Indicates whether a reference road is generated in the frame.

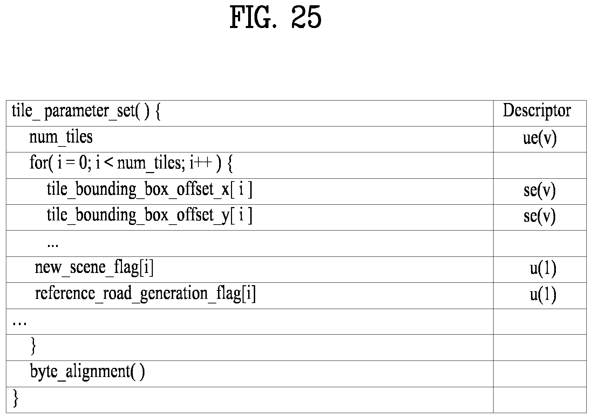

FIG. 25 illustrates a syntax of a tile parameter set (TPS) according to embodiments.

The TPS in FIG. 25 represents the TPS contained in the bitstream of FIG. 22. Option information related the generation of the reference road frame may be added to and signaled in the TPS. Thus, efficient signaling may be performed to support inter-prediction of geometry/attributes. As used herein, the names of signaling information may be understood within the scope of the meaning and functionality of the signaling information.

num_tiles: Indicates the number of tiles signaled for the bitstream. When not present, num_tiles is inferred to be 0.

tile_bounding_box_offset_x[i] indicates the x offset of the i-th tile in Cartesian coordinates. When not present, the value of tile_bounding_box_offset_x[0] is inferred to be sps_bounding_box_offset_x.

tile_bounding_box_offset_y[i] indicates the y offset of the i-th tile in the Cartesian coordinates. When not present, the value of tile_bounding_box_offset_y[0] is inferred to be sps_bounding_box_offset_y.

tile_bounding_box_offset_z[i] indicates the z offset of the i-th tile in the Cartesian coordinates. When not present, the value of tile_bounding_box_offset_z[0] is inferred to be sps_bounding_box_offset_z.

new _scene _flag: Indicates whether the frame in the tile is a new scene compared to the previous frame.

reference_road_generation_flag: Indicates whether a reference road is generated in the tile.

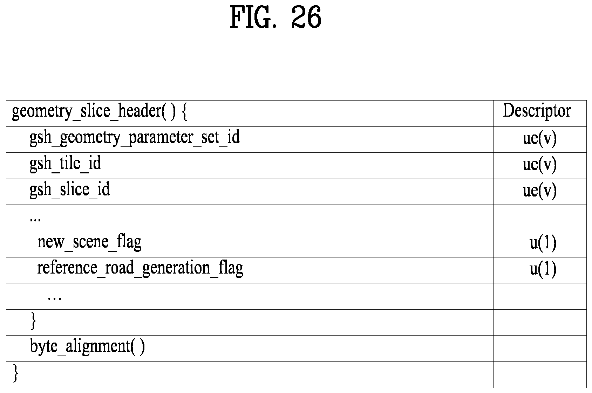

FIG. 26 illustrates a syntax of a geometry slice header (geometry data header) according to embodiments.

The GSH (which may be referred to as Geometry Slice Header, Geometry Data Header, etc.) in FIG. 26 represents the geometry slice header contained in the bitstream of FIG. 22. Option information related the generation of the reference road frame may be added to and signaled in the GSH. Thus, efficient signaling may be performed to support inter-prediction of geometry/attributes. As used herein, the names of signaling information may be understood within the scope of the meaning and functionality of the signaling information. During the geometry information encoding/decoding process, point reference road frame generation information may be added to and signaled in the geometry data header. The reference road frame generated from this information may also be utilized for the attributes.

gsh_geometry_parameter_set_id: Indicates the value of gps_geom_parameter_set_id of the active GPS.

gsh_tile_id: Indicates the value of the tile ID referenced by the GSH. The value of gsh_tile_id may be in the range of 0 to XX.

gsh_slice_id: Indicates the slice header for reference by other syntax elements. The value of gsh_slice_id may be in the range of 0 to XX.

new_scene_flag: Indicates whether the frame in the slice is a new scene compared to the previous frame.

reference_road_generation_flag: Indicates whether a reference road is generated in the slice.

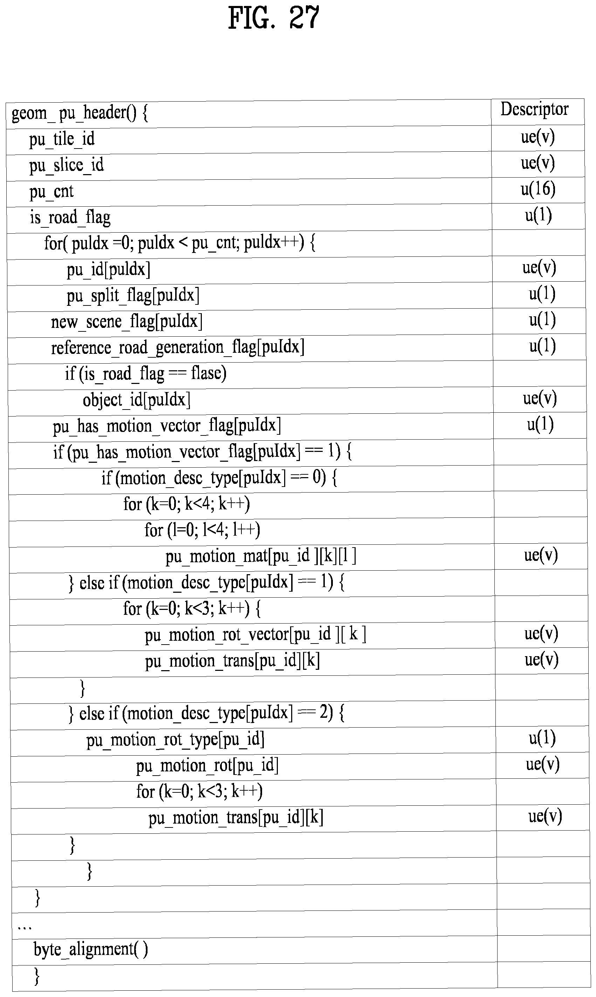

FIG. 27 shows a syntax of a geometry PU header according to embodiments.

The geometry PU header of FIG. 26 is contained in the bitstream of FIG. 22. Option information related the generation of the reference road frame may be added to and signaled in the geometry PU header. Thus, efficient signaling may be performed to support inter-prediction of geometry/attributes. Inter-prediction related reference road frame generation information may be signaled by creating a Geom PU header

pu_tile_id: Indicates the tile ID to which the PU belongs.

pu_slice_id: Indicates the slice ID to which the PU belongs.

pu_cnt: Indicates the number of PUs included in the slice.

pu_id: Indicates the PU ID.

pu_split_flag: Indicates whether the PU block is further split later.

pu_has_motion_vector_flag: Indicates whether the PU block has a motion vector.

pu_motion_mat[][][][]: Indicates the motion matrix applied to the PU block.

pu_motion_rot_vector[][] Indicates the motion rotation vector applied to the PU block.

pu_motion_trans [][]: Indicates the motion translation vector applied to the PU block.

pu_motion_rot_type[]: Indicates the type of motion rotation value applied to the PU block. For example, 0 = radian, and 1 = degree.

pu_motion_rot[]: Indicates the motion rotation applied to the PU block. The rotation axis may be rotated about the road normal vector.

is_road_flag: Indicates whether a point contained in the LPU block is a road/object.

object_id: Indicates the object id of the point contained in the PU block.

new_scene_flag[]: Indicates whether the frame in the PU block is a new scene compared to the previous frame.

reference _road_generation_flag[]: Indicates whether a reference road is generated in the PU block.

FIG. 28 illustrates a point cloud data transmission method according to embodiments.

The point cloud data transmission method according to the embodiments in FIG. 28 may be carried out by the transmission device 10000, the point cloud video encoder 10002, the transmitter 10003 of FIG. 1, the encoder of FIG. 3, the transmission device of FIG. 8, the device of FIG. 10, the encoder of FIG. 20, and the like.

S2800: The point cloud data transmission method according to the embodiments may include encoding point cloud data. In the encoding operation according to the embodiments, the point cloud data may be encoded as illustrated in FIGS. 1 to 10. The encoding operation may include geometry encoding and/or attribute encoding. The encoded point cloud may be included in a bitstream, and parameters related to the encoding may be generated and included in the bitstream (FIGS. 22 to 27). A bitstream including a geometry bitstream and/or an attribute bitstream may be generated. Additionally, when a frame containgn a point cloud is encoded using an inter-frame method, the enconding may include splitting an object and/or a road and performuing predictive encoding. A reference frame for inter-prediction may be generated and updated as illustrated in FIGS. 11 to 19.

S2810: The point cloud data transmission method according to the embodiments may further include transmitting a bitstream containing the point cloud data. In the transmitting operation according to the embodiments, a bitstream as illustrated in FIGS. 22 to 27 may be transmitted.

FIG. 29 illustrates a point cloud data reception method according to embodiments.

The point cloud data reception method illustrated in FIG. 29 may be carried out by the reception device 10004, the receiver 10005, the point cloud video decoder 10006 of FIG. 1, the decoder of FIG. 7, the reception device of FIG. 9, the device of FIG. 10, the decoder of FIG. 21, and the like.

S2900: The point cloud data reception method according to the embodiments may include receiving a bitstream containing point cloud data. In the receiving operation according to the embodiments, a bitstream as illustrated in FIGS. 22 to 27 may be received.

S2910: The point cloud data reception method according to the embodiments may further include decoding the point cloud data. In the decoding operation according to the embodiments, the point cloud data may be decoded as shown in FIGS. 11 to 10. The decoding may include geometry decoding and/or attribute decoding. Based on parameters related to the encoding and/or decoding, the point cloud contained in the bitstream may be decoded. Further, as shown in FIGS. 11 to 19, when a frame containing the point cloud is decoded using an inter-frame method, the decoding may include splitting an object and/or a road and performing predictive decoding. A reference frame for inter-prediction may be generated and updated as illustrated in FIGS. 11 to 19.

The PCC encoding method, PCC decoding method, and signaling method of the embodiments described above may provide the following effects

Referring to FIG. 1, the transmission method according to the embodiments may include encoding point cloud data; and transmitting a bitstream containing the point cloud data.

Referring to FIGS. 11 to 15, regarding configuration of the road/object points, the point cloud data according to the embodiments may include points related to a road and points related to an object. In a frame containing the points related to the road, the points related to the road may be changed by the object related to the road, or may be missing.

Referring to FIG. 16, regarding capturing points for each LiDAR ID, the point cloud data may be acquired by LiDAR, and the point cloud data may include points based on a laser ID of the LiDAR.

Referring to FIG. 17, regarding the method to generate a reference road frame (e.g., without global motion), the encoding of the point cloud data may include encoding a road frame of a current frame containing the point cloud data. The encoding of the road frame may include predicting the road frame of the current frame based on a reference road frame for the road frame of the current frame, searching a previous frame of the reference road frame for a missing point in the reference road frame based on at least one of a laser ID or an angle, and updating the missing point in the reference road frame.

Similarly, the encoding of the road frame may include predicting the road frame of the current frame based on a reference road frame for the road frame of the current frame, searching the reference road frame for a missing point in the road frame based on at least one of a laser ID or an angle, and updating the missing point in the road frame. In other words, when there are multiple road frames and a missing point is present, the missing point may be updated using the previous road frame for the next encoding and/or decoding to generate an enhanced reference road frame for the next road frame encoding/decoding. By updating the current frame before the next frame is encoded/decoded, memory usage may be effectively reduced. Since the current frame already has the previous frame, namely, the reference frame, updating the road in the current frame with reference to the previous road information may delete the previous frame.

Referring to FIG. 18, regarding the method to generate a reference road frame (e.g., when there is only translation), the encoding of the point cloud data may include encoding a road frame of a current frame containing the point cloud data. The encoding of the road frame may include predicting the road frame of the current frame based on a reference road frame for the road frame of the current frame, calculating points for each laser ID based on a spherical coordinate system with origin coordinate information about the reference road frame being changed, searching a previous frame of the reference road frame for a missing point in the reference road frame based on at least one of the laser ID or an angle, and updating the missing point in the reference road frame.

Similarly, the encoding of the road frame may include predicting the road frame of the current frame based on a reference road frame for the road frame of the current frame, calculating points for each laser ID based on a spherical coordinate system with origin coordinate information about the reference road frame being changed, searching the reference road frame for a missing point in the road frame based on at least one of the laser ID or an angle, and updating the missing point in the road frame. Thereby, the method may provide the effects described above.

Referring to FIG. 19, regarding generating a reference road frame (e.g., in the presence of translation/rotation), the encoding of the point cloud data may include encoding a road frame of a current frame containing the point cloud dat. The encoding of the road frame may include predicting the road frame of the current frame based on a reference road frame for the road frame of the current frame, rotating the reference road frame with origin coordinate information about the reference road frame being changed and calculating points for each laser ID based on a spherical coordinate system, searching a previous frame of the reference road frame for a missing point in the reference road frame based on at least one of the laser ID or an angle, and updating the missing point in the reference road frame.

Similarly, the encoding of the road frame may include predicting the road frame of the current frame based on a reference road frame for the road frame of the current frame, rotating the reference road frame with origin coordinate information about the reference road frame being changed and calculating points for each laser ID based on a spherical coordinate system, searching of the reference road frame for a missing point in the road frame based on at least one of the laser ID or an angle, and updating the missing point in the road frame. Thereby, the method may provide the effects described above.

Referring to FIG. 19, regarding generating a reference road frame (e.g., when there is only rotation), the encoding of the point cloud data may include encoding a road frame of a current frame containing the point cloud dat. The encoding of the road frame may include predicting the road frame of the current frame based on a reference road frame for the road frame of the current frame, rotating the reference road frame and calculating points for each laser ID based on a spherical coordinate system, searching a previous frame of the reference road frame for a missing point in the reference road frame based on at least one of the laser ID or an angle, and updating the missing point in the reference road frame.

Similarly, the encoding of the road frame may include predicting the road frame of the current frame based on a reference road frame for the road frame of the current frame, rotating the reference road frame and calculating points for each laser ID based on a spherical coordinate system, searching of the reference road frame for a missing point in the road frame based on at least one of the laser ID or an angle, and updating the missing point in the road frame.

Referring to FIG. 19, regarding initialization nf the reference road frame, the encoding of the point cloud data may further include initializing the reference road frame.

Referring to FIG. 22, regarding signaling, the bitstream may contain at least one of information indicating whether to generate a reference road frame or information indicating whether a current frame is a new scene. For example, the bitstream may contain information indicating whether to generate the reference road frame or information indicating whether the current frame is a new scene, or contain information indicating whether to generate the reference road frame and information indicating whether the current frame is a new scene.

The point cloud data transmission method may be carried out by a transmission device. The transmission device may include an encoder configured to encode point cloud data, and a transmitter configured to transmit a bitstream containing the point cloud data.

A reception method corresponding to the point cloud data transmission method may perform the reverse process to the transmission and may include, for example, receiving a bitstream containing the point cloud data, and decoding the point cloud data.

Similarly, the point cloud data reception method may include decoding the point cloud data, the decoding including decoding a road frame of a current frame containing the point cloud data. The decoding of the road frame may include predicting the road frame of the current frame based on a reference road frame for the road frame of the current frame, searching a previous frame of the reference road frame for a missing point in the reference road frame based on at least one of a laser ID or an angle, and updating the missing point in the reference road frame.

The decoding of the road frame may include predicting the road frame of the current frame based on a reference road frame for the road frame of the current frame, searching the reference road frame for a missing point in the road frame based on at least one of a laser ID or an angle, and updating the missing point in the road frame.

The point cloud data reception method may be carried out by a reception device. The reception device may include a receiver configured to receive a bitstream containing point cloud data, and a decoder configured to the point cloud data.

Thereby, road data containing insufficient information may be supplemented to achieve accurate and fast compression/reconstruction. In other words, missing road points may be added and updated by coordinate origin matching and rotation from previous frames. Depending on the movement of LiDAR equipment, objects, and the like, the reference road frame may be updated differently. In other words, both the LiDAR movement and the object movement may be compensated for. Road frames may be compressed to a smaller bitstream size and reconstructed. This may address the issue of decreasing compression performance caused by the influence of objects.

In the scenario of capturing and storing frames one by one using LiDAR equipment on a moving vehicle, there may be continuity between frames, and thus compression may be efficiently performed using an inter-prediction technique. Since the motions of the captured road and object point clouds are different, splitting the road and object and making fast and accurate motion predictions for each of the road and the object in order to apply the inter-prediction technique efficiently may affect the compression time, and increasing the efficiency of the inter-prediction technique through accurate predictions may reduce the bitstream size. Inaccurate motion prediction may significantly increase the bitstream size, which may reduce compression efficiency. Thus, embodiments may utilize characteristics captured by LiDAR equipment on a moving vehicle to quickly and accurately predict motion.

Embodiments provide methods for road/object splitting to support efficient geometry compression of content captured by LiDAR equipment on a moving vehicle, and for generating a reference road frame used in inter-prediction to increase the efficiency of inter-prediction of roads. A reference road frame may be generated to cumulatively update parts that affect changes to the road as objects move on the same road, to compensate for road points missing due to objects or the capture environment, and to generate a reference road frame only for parts requiring the reference road frame considering increase in memory use.

Thereby, embodiments may increase the inter-geometry compression efficiency of an encoder/decoder of Geometry-based Point Cloud Compression (G-PCC) for compressing 3D point cloud data to provide a point cloud content stream. The reference road frame constructed by the method may also be used as a reference road frame in attribute compression, thereby increasing compression efficiency.

Therefore, the transmission method/device according to the embodiments may efficiently compress point cloud data to transmit the data, and deliver signaling information for the same, and thus the reception method/device according to the embodiments may efficiently decode/reconstruct the point cloud data.

The operations of the transmission and reception devices according to the embodiments described above may be described in connection with the point cloud compression processing described below.

The embodiments have been described in terms of a method and/or a device, and the description of the method and the description of the device may be applied complementary to each other.

Although the accompanying drawings have been described separately for simplicity, it is possible to design new embodiments by combining the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a nontransitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if' and "when" are not limited to an optional case and are intended to perform the related operation or interpret the related definition according to a specific condition when the specific condition is satisfied.

Operations according to the embodiments described in this specification may be performed by a transmission/-reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

[Mode for Disclosure]

As described above, related details have been described in the best mode for carrying out the embodiments.

[Industrial Applicability]

As described above, the embodiments are fully or partially applicable to a point cloud data transmission/reception device and system.
Those skilled in the art may change or modify the embodiments in various ways within the scope of the embodiments.
Embodiments may include variations/modifications within the scope of the claims and their equivalents.

**Claims**

1. A method of transmitting point cloud data, the method comprising:

   encoding point cloud data; and
   transmitting a bitstream containing the point cloud data.

2. The method of claim 1, wherein the point cloud data comprises points related to a road and points related to an object, wherein, in a frame containing the points related to the road, the points related to the road are changed by the object related to the road, or are missing.

3. The method of claim 1, wherein the point cloud data is acquired by LiDAR, wherein the point cloud data comprises points based on a laser ID of the LiDAR.

4. The method of claim 1, wherein the encoding of the point cloud data comprises:

   encoding a road frame of a current frame containing the point cloud data,
   wherein the encoding of the road frame comprises:

   predicting the road frame of the current frame based on a reference road frame 43 the road frame of the current frame;
   searching the reference road frame for a missing point in the road frame based on at least one of a laser ID or an angle; and
   updating the missing point in the road frame.

5. The method of claim 1, wherein the encoding of the point cloud data comprises:

   encoding a road frame of a current frame containing the point cloud data,
   wherein the encoding of the road frame comprises:

   predicting the road frame of the current frame based on a reference road frame for the road frame of the current frame;
   calculating points for each laser ID based on a spherical coordinate system with origin coordinate information about the reference road frame being changed;
   searching the reference road frame for a missing point in the road frame based on at least one of the laser ID or an angle; and
   updating the missing point in the road frame.

6. The method of claim 1, wherein the encoding of the point cloud data comprises:

   encoding a road frame of a current frame containing the point cloud data,
   wherein the encoding of the road frame comprises:

   predicting the road frame of the current frame based on a reference road frame for the road frame of the current frame;

rotating the reference road frame with origin coordinate information about the reference road frame being changed and calculating points for each laser ID based on a spherical coordinate system;

searching the reference road frame for a missing point in the road frame based on at least one of the laser ID or an angle; and

updating the missing point in the road frame.

7. The method of claim 1, wherein the encoding of the point cloud data comprises:

encoding a road frame of a current frame containing the point cloud data,
wherein the encoding of the road frame comprises:

predicting the road frame of the current frame based on a reference road frame for the road frame of the current frame;

rotating the reference road frame and calculating points for each laser ID based on a spherical coordinate system;

searching the reference road frame for a missing point in the road frame based on at least one of the laser ID or an angle; and

updating the missing point in the road frame.

8. The method of claim 4, wherein the encoding of the point cloud data further comprises:
initializing the reference road frame.

9. The method of claim 1, wherein the bitstream contains at least one of

information indicating whether to generate a reference road frame; or
information indicating whether a current frame is a new scene.

10. A device for transmitting point cloud data, comprising:

an encoder configured to encode point cloud data; and
a transmitter configured to transmit a bitstream containing the point cloud data.

11. A method of receiving point cloud data, the method comprising:

receiving a bitstream containing point cloud data; and
decoding the point cloud data.

12. The method of claim 11, wherein the point cloud data comprises points related to a road and points related to an object,
wherein, in a frame containing the points related to the road, the points related to the road are changed by the object related to the road, or are missing.

13. The method of claim 11, wherein the point cloud data is acquired by LiDAR,
wherein the point cloud data comprises points based on a laser ID of the LiDAR.

14. The method of claim 11, wherein the decoding of the point cloud data comprises:

decoding a road frame of a current frame containing the point cloud data,
wherein the decoding of the road frame comprises:

predicting the road frame of the current frame based on a reference road frame for the road frame of the current frame;

searching the reference road frame for a missing point in the road frame based on at least one of a laser ID or an angle; and

updating the missing point in the road frame.

15. A device for receiving point cloud data, comprising:

a receiver configured to receive a bitstream containing point cloud data; and

a decoder configured to decode the point cloud data.

# FIG. 1

# FIG. 2

EP 4 498 679 A1

20000                20001                20002                20003                20004

| ACQUISITION | Ply File<br>-geometry<br>-attribute | ENCODING | ENCODED<br>-geometry<br>-attribute bitstream | TRANSMISSION | | DECODING | DECODED<br>-geometry<br>-attribute | RENDERING |

HEAD ORIENTATION, VIEWPORT INFORMATION

FEEDBACK

HEAD ORIENTATION,
VIEWPORT INFORMATION

20005

# FIG. 3

positions                attributes

30000 — Transform coordinates

30006 — Transform colors

30001 — Quantize and remove points (voxelize)

30007 — Transfer attributes

30002 — Analyze octree

Reconstruct geometry

RAHT

30008

30009 — Gnnerate LOD

30003 — Analyze surface approximation

30010 — Lifting

30005

30011 — Quantize coefficients

30004 — Arithmetic encode

30012 — Arithmetic encode

geometry bitstream            atribute bitstream

# FIG. 4

FIG. 5

# FIG. 6

P0　P1　P4　P3　P6　P7　P9　P5　P8　P2

| | |
|---|---|
| Original order | P0, P1, P2, P3, P4, P5, P6, P7, P8, P9 |

| | |
|---|---|
| LOD-based order | P0, P5, P4, P2　P1, P6, P3　P9, P8, P7 |

LOD0

LOD1

LOD2

# FIG. 7

geomerty
bitstream

attributes
birsrteam

7000 — Arithmerix decode

Arithmerix decode — 7005

7001 — Synthesize octree

Inverse quantize — 7006

7002 — synthesize surface approximation

— 7007

7003 — Reconstruct geometry

RAHT

Gnnerate LOD — 7008

Inverse lifring — 7009

7004 — Inverse transform coordinates

Inverse transform colors — 7010

position

attributes

# FIG. 8

8000 — Data input unit    8007

Position values of points    Set value, etc.    Attribute values of points

8001 — Quantization processor ← Metadata processor → Color transform processor — 8008

8002 — Voxelization processor → Attribute transform processor — 8009

8003 — Octree occupancy code generator → Prediction/lifting/RAHT transform processor — 8010

8004 — Surface model processor → Arithmetic coder — 8011

8005 — Intra/inter-coding processor

8006 — Arithmetic coder

Sharing reconstructed position values

Transmission processor
8012

# FIG. 9

Reception

9000 — Receiver

9001 — Reception processor

9006

Geometry bitstream

Set value, etc.

Attribute bitstream

9002 — Arithmetic decoder

Metadata parser

Arithmetic decoder — 9007

9003 — Occupancy code-based octree reconstruction processor

Inverse quantization processor — 9008

9004 — Surface model processor (triangle reconstruction, up-sampling, voxelization)

Prediction /lifting/RAHT inverse transform processor — 9009

9005 — Inverse quantization processor

Color inverse transform processor — 9010

Sharing reconstructed position values

Renderer — 9011

# FIG. 10

Home Appliance — 1050

1060
AI Server

1070
HMD

1010
Robot

1040
Smartphone

1000
Network
( 5G )

XR devive — 1030

Self - Driving Vehicle — 1020

FIG.11

FIG. 12

## FIG. 13

FIG.14

FIG.15

1402          1401

# FIG.16

laserID = 0

laserID = 3

laserID = 3

...
128

Ground

When an object is present, the road point cloud does not have points.
(e.g. When laserID=2, 3, there are no points of the point cloud separated as a road.)

FIG. 17

1700

FIG. 18

1800

1801

FIG. 19

# FIG.20

Data input unit
(geometry, attributes, parameters)

Coordinate transformer

Geometry information transform
/quantization processor

Spatial partitioner

분할된 어트리뷰트 원본 데이터

Attribute information encoder

Color transform processor

Geometry information encoder

Voxelization processor

LPU splitter
(Road/object splitting)

Type of frame

P- Frame

PU motion
Motion predictor

I- Frame

PU splitter

Reference road frame
generation flag

Whether to generate
reference road frame
Threshold for determining
similarity between frames

Motion compensation
application part

new scene flag

Geometry information
intra-predictor

Geometry information
inter-predictor

Reference frame buffer

Geometry information
entropy encoder

Reconstructed geometry information

Geometry information bitstream

Lossy-geom?

Yes

Recolorer

No

Attr intra-
prediction?

No

Attribute information
inter-predictor

Yes

Attribute information
intra-predictor

Reconstructed attribute
information

Attribute information entropy encoder

Attribute information bitstream

EP 4 498 679 A1

# FIG.21

**Attribute information decoder**

Attribute information bitstream →

- Attribute residual information entropy decoder
- Attr Intra coding?
  - No → Attribute information inter-prediction reconstructor
  - Yes → Attribute information intra-prediction reconstructor
- Reconstructed attribute information
- Color inverse transform processor
- Attribute information

**Geometry information decoder**

Geometry information bitstream →

- Geometry information entropy decoder
- Geom Intra coding?
  - No → LPU splitter (Road/object splitting) → Motion compensation application part → Geometry information inter-prediction reconstructor
    - new scene flag
    - Reference road frame generation flag
    - PU motion
  - Yes → Geometry information intra-prediction reconstructor
- Reference frame buffer
- Reconstructed geometry information
- Geometry information transform inverse quantization processor
- Coordinate inverse transformer
- Geometry information

## FIG.22

| SPS | GPS | APS 0 | APS 1 | TPS | Slice0 | | | | | | | | |
|---|---|---|---|---|---|---|---|---|---|---|---|---|---|
| | | | | | Geom0 | | | | ... | Attr0 | | | ... |
| | | | | | Geom slice header | Geom PU0 | | Geom PU1 | | Attr slice header | Attr PU0 | | Attr PU0 |
| | | | | | | Geom PU Header | Geom PU data | | | | Attr PU header | Attr PU data | |

| Attr1 |
|---|
| ... |
| ... |

# FIG. 23

| seq _ parameter_set_rbsp( ) { | Descriptor |
|---|---|
| profile_idc | u(8) |
| profile_compatibility_flags | u(24) |
| … | |
| sps_num_attribute_sets | ue(v) |
| for( i = 0; i< sps_num_attribute_sets; i++ ) { | |
| attribute_dimension[ i ] | ue(v) |
| attribute_instance_id[ i ] | ue(v) |
| … | |
| } | |
| reference_road_generation_flag | u(1) |
| … | |
| byte_alignment( ) | |
| } | |

# FIG. 24

| geometry_ parameter_set_rbsp( ) { | Descriptor |
|---|---|
| gps_geom_ parameter_set_id | ue(v) |
| gps_seq _ parameter_set_id | ue(v) |
| geom_tree_type | u(2) |
| ... | |
| new_scene_flag | u(1) |
| reference_road_generation_flag | u(1) |
| … | |
| byte_alignment( ) | |
| } | |

# FIG. 25

| tile_ parameter_set( ) { | Descriptor |
|---|---|
| num_tiles | ue(v) |
| for( i = 0; i < num_tiles; i++ ) { | |
| tile_bounding_box_offset_x[ i ] | se(v) |
| tile_bounding_box_offset_y[ i ] | se(v) |
| ... | |
| new_scene_flag[i] | u(1) |
| reference_road_generation_flag[i] | u(1) |
| ... | |
| } | |
| byte_alignment( ) | |
| } | |

# FIG. 26

| geometry_slice_header( ) { | Descriptor |
|---|---|
| gsh_geometry_parameter_set_id | ue(v) |
| gsh_tile_id | ue(v) |
| gsh_slice_id | ue(v) |
| ... | |
| new_scene_flag | u(1) |
| reference_road_generation_flag | u(1) |
| ... | |
| } | |
| byte_alignment( ) | |
| } | |

# FIG. 27

| geom_pu_header() { | Descriptor |
|---|---|
| pu_tile_id | ue(v) |
| pu_slice_id | ue(v) |
| pu_cnt | u(16) |
| is_road_flag | u(1) |
| for( puIdx =0; puIdx < pu_cnt; puIdx++) { | |
| pu_id[puIdx] | ue(v) |
| pu_split_flag[puIdx] | u(1) |
| new_scene_flag[puIdx] | u(1) |
| reference_road_generation_flag[puIdx] | u(1) |
| if (is_road_flag == flase) | |
| object_id[puIdx] | ue(v) |
| pu_has_motion_vector_flag[puIdx] | u(1) |
| if (pu_has_motion_vector_flag[puIdx] == 1) { | |
| if (motion_desc_type[puIdx] == 0) { | |
| for (k=0; k<4; k++) | |
| for (l=0; l<4; l++) | |
| pu_motion_mat[pu_id ][k][l ] | ue(v) |
| } else if (motion_desc_type[puIdx] == 1) { | |
| for (k=0; k<3; k++) { | |
| pu_motion_rot_vector[pu_id ][ k ] | ue(v) |
| pu_motion_trans[pu_id][k] | ue(v) |
| } | |
| } else if (motion_desc_type[puIdx] == 2) { | |
| pu_motion_rot_type[pu_id] | u(1) |
| pu_motion_rot[pu_id] | ue(v) |
| for (k=0; k<3; k++) | |
| pu_motion_trans[pu_id][k] | ue(v) |
| } | |
| } | |
| } | |
| ... | |
| byte_alignment( ) | |
| } | |

# FIG. 28

| | |
|---|---|
| Encode point cloud data | — S2800 |

| | |
|---|---|
| Transmit bitstream containing point cloud data | — S2810 |

# FIG. 29

| Receive bitstream containing point cloud data | ~ S2900 |
| Decode point cloud data | ~ S2910 |

## INTERNATIONAL SEARCH REPORT

| International application No. |
|---|
| **PCT/KR2023/003708** |

| A. | CLASSIFICATION OF SUBJECT MATTER |
|---|---|

**H04N 19/597**(2014.01)i; **H04N 19/70**(2014.01)i; **H04N 19/119**(2014.01)i; **H04N 19/105**(2014.01)i; **G01S 17/894**(2020.01)i; **G01S 17/931**(2020.01)i

According to International Patent Classification (IPC) or to both national classification and IPC

| B. | FIELDS SEARCHED |
|---|---|

Minimum documentation searched (classification system followed by classification symbols)

H04N 19/597(2014.01); G01S 17/89(2006.01); G06T 7/10(2017.01); G06T 7/11(2017.01); H04N 19/136(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 인코딩(encoding), 도로(road), 객체(object), 손실 (missing)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2021-0116336 A (LG ELECTRONICS INC.) 27 September 2021 (2021-09-27) See paragraphs [0018]-[0024] and [0103]; claims 1-5; and figures 1 and 7. | 1,3,9-11,13,15 |
| Y | | 2,12 |
| A | | 4-8,14 |
| Y | KR 10-2020-0096726 A (BAIDU.COM TIMES TECHNOLOGY (BEIJING) CO., LTD. et al.) 13 August 2020 (2020-08-13) See paragraphs [0149]-[0166]; claims 1-10; and figures 29-30. | 2,12 |
| A | KR 10-2021-0149624 A (MOTIONAL AD LLC) 09 December 2021 (2021-12-09) See paragraphs [0123]-[0130]; and figures 13-16. | 1-15 |
| A | KR 10-2021-0063841 A (FOUNDATION OF SOONGSIL UNIVERSITY-INDUSTRY COOPERATION) 02 June 2021 (2021-06-02) See paragraphs [0026]-[0059]; and figure 1. | 1-15 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 June 2023** | **26 June 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2" align="center"><strong>INTERNATIONAL SEARCH REPORT</strong></td><td>International application No.<br><br><strong>PCT/KR2023/003708</strong></td></tr>
</table>

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2021-0102953 A (CONTINENTAL AUTOMOTIVE GMBH et al.) 20 August 2021 (2021-08-20)<br>See claims 1-10. | 1-15 |

Form PCT/ISA/210 (second sheet) (July 2022)

INTERNATIONAL SEARCH REPORT
Information on patent family members

International application No.

**PCT/KR2023/003708**

| Patent document cited in search report | | | Publication date (day/month/year) | Patent family member(s) | | | Publication date (day/month/year) |
|---|---|---|---|---|---|---|---|
| KR | 10-2021-0116336 | A | 27 September 2021 | CN | 115280780 | A | 01 November 2022 |
| | | | | EP | 4124041 | A1 | 25 January 2023 |
| | | | | KR | 10-2378138 | B1 | 25 March 2022 |
| | | | | US | 2021-0289211 | A1 | 16 September 2021 |
| | | | | WO | 2021-187839 | A1 | 23 September 2021 |
| KR | 10-2020-0096726 | A | 13 August 2020 | CN | 111771206 | A | 13 October 2020 |
| | | | | EP | 3710984 | A1 | 23 September 2020 |
| | | | | JP | 2021-516355 | A | 01 July 2021 |
| | | | | JP | 7127071 | B2 | 29 August 2022 |
| | | | | KR | 10-2334641 | B1 | 03 December 2021 |
| | | | | US | 11468690 | B2 | 11 October 2022 |
| | | | | US | 2021-0350147 | A1 | 11 November 2021 |
| | | | | WO | 2020-154967 | A1 | 06 August 2020 |
| KR | 10-2021-0149624 | A | 09 December 2021 | CN | 114089375 | A | 25 February 2022 |
| | | | | US | 2021-0373173 | A1 | 02 December 2021 |
| KR | 10-2021-0063841 | A | 02 June 2021 | KR | 10-2276044 | B1 | 12 July 2021 |
| KR | 10-2021-0102953 | A | 20 August 2021 | CN | 113196341 | A | 30 July 2021 |
| | | | | EP | 3895135 | A1 | 20 October 2021 |
| | | | | JP | 2022-513830 | A | 09 February 2022 |
| | | | | US | 2021-0304492 | A1 | 30 September 2021 |
| | | | | WO | 2020-118619 | A1 | 18 June 2020 |

Form PCT/ISA/210 (patent family annex) (July 2022)